(19) Europäisches Patentamt
European Patent Office
Office européen des brevets

(11) **EP 2 667 117 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***F25B 41/06*** *(2006.01)*

(21) Anmeldenummer: **13161020.6**

(22) Anmeldetag: **26.03.2013**

(54) **Verfahren für die Steuerung und Regelung von Kälteanlagen und Wärmepumpen mit luftbeaufschlagtem Verdampfer**

Method for controlling and regulating refrigeration assemblies and heat pumps with an air-cooled evaporator

Procédé de commande et de réglage d'installations de refroidissement et de pompes à chaleur avec évaporateur à air

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2012 DE 102012208819**

(43) Veröffentlichungstag der Anmeldung:
**27.11.2013 Patentblatt 2013/48**

(73) Patentinhaber: **Honeywell Technologies Sarl**
**1110 Morges (CH)**

(72) Erfinder:
• **Raehder, Christian**
**02797 Lückendorf (DE)**

• **Sichmund, Carsten**
**06114 Halle (Saale) (DE)**
• **Osthues, Josef**
**74867 Neunkirchen (DE)**
• **Küpper, Hans-Dieter**
**74219 Möckmühl (DE)**

(74) Vertreter: **TBK**
**Bavariaring 4-6**
**80336 München (DE)**

(56) Entgegenhaltungen:
**WO-A2-2011/089116    US-A- 5 735 134**
**US-A- 5 966 950**

**Beschreibung**

Die vorliegende Erfindung betrifft ein Verfahren zum Steuern von Kälteanlagen beziehungsweise Wärmepumpen.

Insbesondere betrifft die Erfindung ein Verfahren für die Funktionsweise einer technischen Einrichtung zur automatischen Überwachung, Steuerung und Regelung von Kälteanlagen und Wärmepumpen mit luftbeaufschlagtem Verdampfer.

In einer Kälteanlage bzw. Wärmepumpe sind ein oder mehrere Verdampfer, ein oder mehrere Verdichter, ein oder mehrere Kondensator/en bzw. Verflüssiger und ein oder mehrere durch ein Regelgerät regelbare/s Expansionsventil/e in einem geschlossenen Kreislauf hintereinander angeordnet.

Bei einem z.B. aus der Patentschrift US-4523435 bekannten Regelgerät wird ein Expansionsventil so gesteuert, dass möglichst keine unverdampfte Kühlflüssigkeit aus dem Verdampfer über die Saugleitung in den Verdichter bzw. Kompressor gelangt. Zu diesem Zweck wird dort das Stellsignal des Expansionsventils in Abhängigkeit von der Größe und Änderungsgeschwindigkeit der Überhitzungstemperatur des Dampfes im Verdampfer gesteuert, wobei der Sollwert der Überhitzungstemperatur fest eingestellt wird.

Jedoch ist aufgrund ihrer schwachen Korrelation zum Vereisungsprozess eine Regelung auf der Grundlage nur der Überhitzungstemperatur für das Bereitstellen eines Vereisungsindikators nicht optimal.

Weiterhin offenbart die Druckschrift WO 2011/089116 A2 ein Verfahren zum Steuern der Überhitzungstemperatur eines Kältemittels in einer Verdampfungseinrichtung, wobei eine virtuelle Wärmeleistung der Verdampfungseinrichtung bestimmt wird, die funktionell von der Überhitzungstemperatur, der spezifischen Wärmekapazität des Kältemittels und der spezifischen Enthalpie im Sattdampfzustand abhängig ist.

Der vorliegenden Erfindung liegt die Aufgabe zugrunde, ein verbessertes Verfahren für die Steuerung und Regelung von Kälteanlagen und Wärmepumpen mit luftbeaufschlagtem Verdampfer bereitzustellen.

Diese Aufgabe ist durch ein Verfahren nach Patentanspruch 1 gelöst.

Weitere Merkmale und vorteilhafte Ausführungen sind in den abhängigen Ansprüchen gezeigt.

Gemäß einem Aspekt der Erfindung ist Verfahren gemäß Anspruch 1 für die Steuerung und Regelung der Temperaturdifferenz $DT_1$ zwischen der Eintrittstemperatur von Luft $T_{L,e}$ und der Eintrittstemperatur eines Kältemittels $T_V$ in einer Verdampfungseinrichtung einer Wärmepumpe oder Kälteanlage bereitgestellt. Dabei werden folgende Schritte durchgeführt: Bilden einer virtuellen Energiestrom-Bilanz für die Bestimmung einer virtuellen Kälteleistung, Bestimmen eines Sollwerts für die Temperaturdifferenz $DT_{1,Soll}$ als Regelgröße, und Betätigen eines Expansionsventils der Wärmepumpe oder der Kälteanlage, so dass die Temperaturdifferenz $DT_1$ dem Sollwert für die Temperaturdifferenz $DT_{1,Soll}$ entspricht. Die virtuelle Energiestrom-Bilanz wird derart gebildet, dass sich die virtuelle Energiestrom-Bilanz in allen Arbeitpunkten der Wärmepumpe oder Kühlanlage näherungsweise proportional zur realen Energiestrom-Bilanz verhält, indem die virtuelle Kälteleistung der Verdampfungseinrichtung $\dot{Q}_{Wv}$ durch die funktionelle Abhängigkeit von den bekannten Größen Temperaturdifferenz $DT_1$, Überhitzungstemperatur $T_Ü$ als Differenz zwischen der Austrittstemperatur $T_{nV}$ und der Verdampfungstemperatur $T_V(p_V)$ des Kältemittels in der Verdampfungseinrichtung, spezifische Wärmekapazität $c''_p(p_V)$ und spezifische Enthalpie $h''(p_V)$ des Kältemittels im Sattdampfzustand, Hub des Expansionsventils $y_{EXV}$ und einem ventilspezifischen Korrekturfaktor $K_{EXV}$, der für jeden Arbeitspunkt des Expansionsventils gebildet wird, gebildet wird, wobei sich der ventilspezifische Korrektur-Koeffizient ($K_{EXV}$) mit der realen Wärmeleistung ($\dot{Q}_{Wr}$), welche aus den Ventil-Daten für maximalen Hub ($y_{EXV} = y_{EXV,\,max}$) bestimmbar ist, aus der Formel

$$K_{EXV} = \left[ \frac{\dot{Q}_{Wr}}{y} \cdot \frac{1}{h''} \right]_{EXV,max}$$

ergibt. Über den Arbeitsbereich der Wärmepumpe oder Kälteanlage wird basierend auf der Abhängigkeit zwischen der bestimmten virtuellen Kälteleistung $\dot{Q}_{Wv}$ und der Temperaturdifferenz $DT_1$ an der Stabilitätsgrenze der geregelten Wärmepumpe oder Kälteanlage $[\dot{Q}_{Wv}(T_Ü)]_{StG}$, die anhand des Anstiegswinkels $\alpha_{TnV}$ der Temperatur am Verdampferaustritt und dem Abstand der Überhitzungstemperatur $T_{Ü,i}$ von dem Grenzwert $T_{Ü,MSS,i}$ in jedem Arbeitspunkt i bestimmt wird, eine virtuelle MSS-Kennlinie $[\dot{Q}_{Wv}(DT_1)]_{MSS}$ gebildet, und die Funktionswerte von $DT_{1,MSS}$, die bei bekannter virtueller Kälteleistung $\dot{Q}_{Wv}$ aus der Funktion für die virtuelle MSS-Kennlinie $[\dot{Q}_{Wv}(DT_1)]_{MSS}$ bestimmbar sind, werden für die Bestimmung des Sollwerts $DT_{1,Soll}$ genutzt. Gemäß dem Aspekt der Erfindung weist das Verfahren weiterhin die Schritte auf: Normieren des bestimmten Sollwerts $DT_{1,Soll}$ mittels eines zu gegenwärtigen Umgebungsbedingungen für den günstigsten Sollwert bei unvereister Verdampferoberfläche ermittelten Referenzwerts $DT_{1,Soll,min}$ über die Beziehung $DT_{1,Soll}^* = DT_{1,Soll}/DT_{1,Soll,min}$, Vergleichen des normierten Werts $DT_{1,Soll}^*$ mit einem voreingestelltem Referenzwert, um so den Verlauf einer Vereisung der Verdampferoberfläche zu erkennen, und

Bestimmen, dass eine Vereisung der luftseitigen Verdampferoberfläche vorliegt, wenn der normierte Wert $DT_{1,Soll}^{*}$ den Referenzwert übersteigt.

Gemäß dem Aspekt der Erfindung kann der bestimmte Sollwert $DT_{1,Soll}$ eines bestimmten Arbeitspunkts i als arbeitspunktspezifischer Wert $DT_{1,Soll,min,i}$ gespeichert werden, wobei der Arbeitspunktbezug in Abhängigkeit der Eintrittstemperatur der Luft $T_{L,e}$ und der Eintrittstemperatur des Kältemittels $T_V$ gekoppelt mit der Stellgröße am Expansionsventil $u_V$; $y_{EXV}$ erfolgt.

Gemäß dem Aspekt der Erfindung wird in Abhängigkeit des Arbeitspunktes der Wert des arbeitspunktspezifischen Werts $DT_{1,Soll,min,i}$ durch Vergleich mit einem zuvor hinterlegten Wert für diesen Arbeitspunkt i auf sein Minimum hin geprüft, und bei Erkennen eines neuen geringeren Wertes als Minimum ersetzt werden. Gemäß dem Aspekt der Erfindung können Signalgrößen gespeichert werden, die eine Vereisung anzeigen, und durch das Speichern der die Vereisung anzeigenden Signalgrößen und in Abhängigkeit der Zeit und der Eintrittstemperatur der Luft $T_{L,e}$ sowie der am Kondensator messbaren lastsignifikanten Größen $T_{W,e}$; $T_{W,a}$ ein für die vorhandenen Einflussgrößen gültiger Modellverlauf des Prozessverhaltens während eines Vereisungsvorgangs erzeugt wird, der bei wiederholt gleichen oder näherungsweise gleichen Werten der erfassten Prozessgrößen für die Bestimmung einer solchen am Kondensator abgegebenen Wärmeleistung zugrunde gelegt wird, so dass für die Wärmepumpe oder Kälteanlage eine geforderte Zeitdauer bis zur Vereisung verfügbar ist.

Gemäß dem Aspekt der Erfindung kann der voreingestellte Referenzwert eine veränderbare Empfindlichkeitseinstellung für die Vereisungserkennungsfunktion aufweisen.

Gemäß dem Aspekt der Erfindung kann der Sollwert der Regelgröße $DT_{1,Soll}$ außer von dem Wert $DT_{1,MSS}$ weiterhin über die Beziehung $DT_{1,Soll} = DT_{1,MSS} + T_{\ddot{U},min}$ von einem anlagenspezifisch festzulegenden Wert der Überhitzungstemperatur $T_{\ddot{U},min}$ abhängen, der einen Mindestwert der Überhitzungstemperatur $T_{\ddot{U}}$ darstellt, damit ein stabiler Zustand der Wärmepumpe oder Kälteanlage erreicht wird.

Gemäß dem Aspekt der Erfindung kann eine Stabilitätskontrolle dadurch erfolgen, dass eine Überschreitung der MSS-Kennlinie aus dem stabilen Arbeitsbereich kommend festgestellt wird, indem eine instabile Prozesssituation aus dem Überschreiten einer als Grenzwert festgelegten Neigung des Zeit-Verlaufs der Temperatur $T_{nV}$ des Kältemittels am Verdampferaustritt bestimmt wird.

Gemäß dem Aspekt der Erfindung kann bei Erkennung einer instabilen Prozesssituation eine zusätzliche Überhöhungstemperatur $DT_{1,instab}$ dem Sollwert $DT_{1,Soll}$ hinzuaddiert werden, um damit ein schnelles Schließen des Expansionsventils zu erreichen und den Regelungsprozess in den stabilen Arbeitsbereich zu überführen.

Gemäß dem Aspekt der Erfindung kann die Arbeitsweise des Prozesses und der Regeleinrichtung selbsttätig daraufhin kontrolliert werden, ob diese sich im stabilen Arbeitsbereich befindet, indem mittels auf messbare Größen und Parameter gestützten statischen und dynamischen Merkmalen die Stabilität bzw. Instabilität festgestellt wird, wobei in jedem der mit einem zeitlichen Abstand T aufeinanderfolgend aufgenommenen Prozesszustände eine selbsttätige Korrektur der virtuellen MSS-Kennlinie um den Wert $\Delta DT_{1,MSS}$ erfolgt, wodurch eine Anpassung an die im jeweiligen Arbeitspunkt tatsächlich bestehenden aber nicht direkt messbaren Prozesseigenschaften erreicht wird und somit die virtuelle MSS-Kennlinie proportional zur realen MSS-Kennlinie verläuft.

Gemäß dem Aspekt der Erfindung kann das Verfahren weiterhin die Schritte aufweisen: Festlegen von Toleranzbändern für die Werte der messbaren und rechnerisch rekonstruierbaren Größen über festlegbare Zeitabschnitte $\Delta t_{stabil}$, innerhalb denen die Stabilität des Verdampfungsprozesses gewährleistet ist, und Durchführen einer Korrektur des Sollwerts $DT_{1,Soll}$ und/oder der MSS-Kennlinie wenn festgestellt wird, dass mindestens eines der Toleranzbänder verlassen wird.

Gemäß dem Aspekt der Erfindung kann die Korrektur des Sollwerts $DT_{1,Soll}$ oder von Punkten der virtuellen MSS-Kennlinie derart erfolgen, dass der Sollwert $DT_{1,Soll}$ stetig geändert wird, so dass ein vorbestimmter Schwellenwert eines Schwankungsausmaßes der Prozessgrößen nicht überschritten wird.

Im Folgenden ist die Erfindung anhand bevorzugter Ausführungsbeispiele mit Bezugnahme auf die anhängenden Fig.en beschrieben, in denen gilt:

Fig. 1 zeigt einen schematischen Aufbau von Wärmepumpen/Kühlanlagen mit Verdampfungsregelung;

Fig. 2 zeigt reale und virtuelle MSS-Kennlinien;

Fig. 3 zeigt einen Messdaten-Vergleich der Verläufe von realer und virtueller Wärmeleistung;

Fig. 4 veranschaulicht einen Verlauf der Überhitzungstemperatur bei verschiedenen Prozesssituationen;

Fig. 5 ist ein Programmablaufplan eines Verfahrens gemäß einem Ausführungsbeispiel der Erfindung;

Fig. 6 zeigt ein Blockschema eines technisch ausgeführten Steuer- und Regelsystems gemäß einem Ausführungsbeispiel der vorliegenden Erfindung;

Fig. 7a zeigt einen Verlauf von $DT_{1, Soll}$ bei zunehmender Vereisung der Verdampferoberfläche, wenn die Wärmepumpe keine EVI- ("enhanced vapour injection")- Schaltung aufweist;

Fig. 7b zeigt einen Verlauf von $DT_{1, Soll}$ bei zunehmender Vereisung der Verdampferoberfläche, wenn die Wärmepumpe eine EVI-("enhanced vapour injection")- Schaltung aufweist;

Fig. 8 zeigt Funktionsdarstellung für den Zusammenhang $DT_{1, Soll, min} (T_{L, e}, T_{W, e})$; und

Fig. 9 zeigt eine Funktionsergänzung der Steuer- und Regeleinrichtung durch die Vereisungsbeobachtung gemäß einem Ausführungsbeispiel der Erfindung.

Es sei angemerkt, dass die vorliegende Erfindung nicht auf die nachstehend beschriebenen Ausführungsbeispiele beschränkt ist. Vielmehr können beliebige Ausgestaltungen, die auch eine Kombination von zwei oder mehrere der gezeigten Ausführungsbeispielen darstellen können, im Lichte des durch die Patentansprüche definierten Umfangs entwickelt werden.

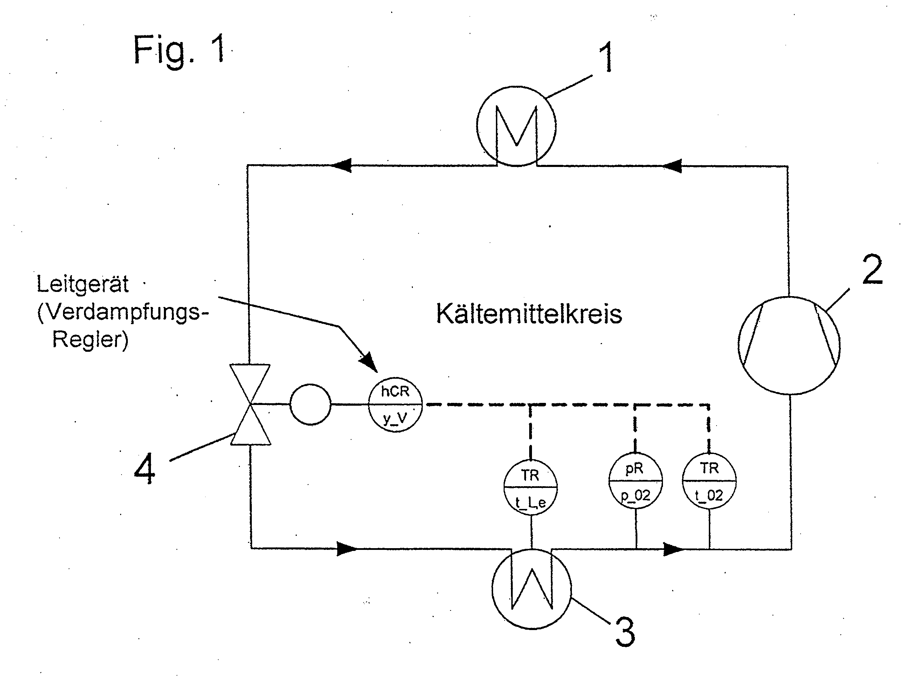

Gemäß einem Ausführungsbeispiel ist ein Verfahren für die Funktionsweise einer technischen Einrichtung zur automatischen Überwachung, Steuerung und Regelung von Kälteanlagen und Wärmepumpen mit luftbeaufschlagtem Verdampfer für die automatische Steuerung, Regelung und Prozessüberwachung mittels eines Automatisierungsgeräts für den Anlagenteil Verdampfer einer Wärmepumpe oder Kühleinrichtung (siehe Fig. 1) mit einem luftbeaufschlagten Verdampfer vorgesehen, und kann gemäß dem Ausführungsbeispiel insbesondere die folgenden Aufgaben durchführen:

- Bestimmung des optimalen Sollwerts für die Regelgröße, das ist die Temperaturdifferenz $DT_1 = T_{L, e} - T_V$ zwischen der Eintrittstemperatur der Luft und der Verdampfungstemperatur des Kältemittels oder die Überhitzungstemperatur $T_Ü = T_{nV} - T_V$ als Differenz zwischen der Austrittstemperatur $T_{nV}$ und der Verdampfungstemperatur $T_V(p_V)$ des Kältemittels im Verdampfer.

- Kontrolle und Gewährleistung der stabilen Arbeitsweise des geregelten Verdampfungsprozesses zur Vermeidung unerwünschter Schwingungen von Prozessgrößen.

- Kompensation von Störwirkungen, die zu Abweichungen der Regelgröße von ihrem Sollwert führen können.

- Erkennung von Vereisung der luftseitigen Verdampfer-Oberfläche, Ausgabe eines dafür bestimmten Signalwertes zur Erzeugung einer daraus ableitbaren Steuerwirkung für einen Abtauvorgang.

- Steuerung des zeitlichen Ablaufs des Vereisungsprozesses und Optimierung des energetischen Nutzens (der Wärmeaufnahme aus der dem Verdampfer zugeführten Luft).

Für die genannten Aufgabenbereiche werden die erforderlichen technischen Funktionen durch eine nach dem beschriebenen Verfahren arbeitende Automatisierungseinrichtung (Leitgerät, Automatisierungsgerät) in komplexer Weise gelöst. Das damit zu bestimmende Optimum soll sowohl technisch wie technologisch eine optimale Funktionsweise des Verdampfungsprozesses in Wärmepumpen und Kälteanlagen mit luftbeaufschlagtem Verdampfer gewährleisten.

Fig. 1 erklärt schematisch den Aufbau einer Luftwärmepumpe oder Kälteanlage durch eine Fließbilddarstellung. Im einfachsten Fall besteht der Kreisprozess der Wärmepumpen- oder Kälteanlage aus den vier Zustandsänderungen eines Kältemittels, nämlich Verdichten, Verflüssigen, Drosseln und Verdampfen. Diese werden in den vier Grundkomponenten Verdichter 2, Kondensator 1, Expansionsventil 4 und Verdampfer 3 vollzogen. Dabei kann der Verdichter 2 auch aus einer Verbundanlage mit mehreren Verdichtern bestehen.

Für das beschriebene Verfahren werden die Messgrößen Lufteintrittstemperatur $t\_L,e$, Druck im Kältemittel $p\_02$, Temperatur des Kältemittels am Verdampferaustritt $t\_02$ sowie die Stellgröße Ventilhub des Expansionsventils $y\_V$ durch diese Instrumentierung berücksichtigt.

Funktionsbereich Steuerung und Regelung

Für die Regelung des Verdampfungsprozesses, welcher z.B. in einer durch Fig. 1 beschriebenen und als Verdampfer bezeichneten technischen Einrichtung stattfindet, kann als Regelgröße wahlweise die Temperaturdifferenz $DT_1$ aus $DT_1 = T_{L,e} - T_V$ zwischen eintretendem Luftstrom mit der Temperatur $T_{L,e}$ und der Verdampfungstemperatur

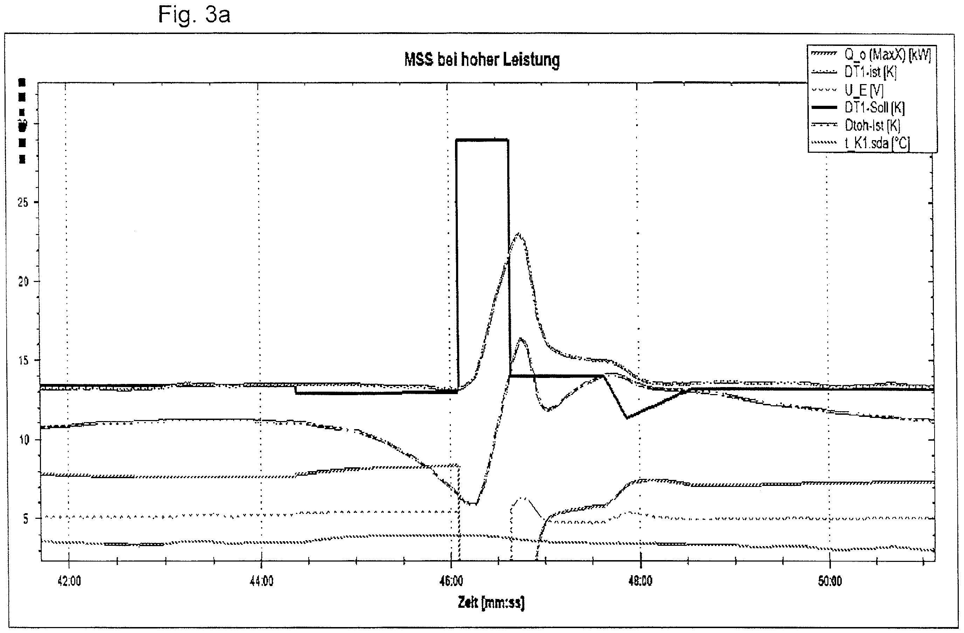

$T_V(p_V)$ des Kältemittels oder die Überhitzungstemperatur $T_Ü$ des Kältemittels, bestimmt durch den Zusammenhang $T_Ü$ = $T_{nV}$ - $T_V$ verwendet werden. Die genäherte Proportionalität zwischen $DT_1$ und $T_Ü$ ist aus dem Diagramm in Fig. 3a (später erläutert) gut erkennbar.

Störungen, die auf den thermodynamischen Zustand des Kältemittels wirken, werden insbesondere aus der Messgröße $p_V$, welche zur Bestimmung der Temperatur $T_V$ im Kältemittel aufgenommen wird, im Verdampfer mit geringerer Verzögerung als Information erkennbar als dies aus der Temperatur $T_{nV}$ am Verdampferaustritt möglich ist. Außerdem wird in der Größe $DT_1$ der wichtige Störeinfluss von schwankender Lufttemperatur $T_{L, e}$ unmittelbar berücksichtigt, so dass der Verwendung der Temperaturdifferenz $DT_1$ als Regelgröße gegenüber der Überhitzungstemperatur $T_Ü$ der Vorzug gegeben werden sollte.

Die weiteren Beschreibungen erfolgen daher insbesondere für die Verwendung der Regelgröße $DT_1$. Bei Verwendung von $T_Ü$ als Regelgröße ist eine analoge Funktionsweise der Steuerungs- und Regelungseinrichtung zutreffend, zumal die technisch und technologisch wichtige Mindestüberhitzung $T_{Ü,min}$ im Sinne eines Offset-Anteils für die Bestimmung des Sollwerts der Regelgröße für beide möglichen Regelgrößen identisch ist. Die Formeln (4) und (5) erklären das.

Die Bestimmung des optimalen Sollwerts in jedem Arbeitspunkt und Betriebszustand ist als Voraussetzung für die Erreichung der Vorteile dieses Verfahrens sehr wichtig.

Grundsätzlich gelten die Funktionsgrundlagen des beschriebenen Verfahrens in analoger Wirkungsweise für beide Regelgrößen.

Das beschriebene Verfahren dient insbesondere dazu, mittels Automatisierungsgeräten eine energetische Optimierung des Betriebs von Wärmepumpen und Kälteanlagen zu erreichen. Dies erfordert ein während des Anlagenbetriebs auswertbares Kriterium für die Prozessbewertung. Das Verfahren erklärt dafür eine technisch realisierbare Möglichkeit für nach dem Stand der Technik mit Sensoren ausgerüstete Verdampfer, wie dies aus dem Fließbild in Fig. 1 hervorgeht.

Wichtigste Grundlage für eine Regelung des Verdampfungsprozesses nach dem beschriebenen Verfahren ist die Bildung einer Virtuellen Kälteleistung nach Formel (1) bzw. (2). Als Kälteleistung ist dabei die im Verdampfer zwischen der an der Außenfläche vorbeiströmenden Luft und dem Kältemittel die an das Kältemittel übertragene Wärmeleistung zu verstehen. Daher ist die durch das Verfahren begründete Funktionsweise über eine thermodynamische Energiestrombilanz erklärbar.

Dazu werden die am Verdampfer aufgenommenen Messwerte $T_{L,e}$, $p_V$ bzw. $T_V(p_V)$ und $T_{nV}$ sowie der als Stellgrößenwert geltende Stellhub des Expansionsventils $y_{EXV}$ (an Stelle der Größe $y_{EXV}$ kann auch die proportionale Eingangsgröße des Stellantriebs des Expansionsventils, die Druckdifferenz über das Expansionsventil oder eine vom Durchfluss abgeleitete Größe verwendet werden) für die Bestimmung einer virtuellen Kälteleistung eingesetzt. Mittels der Messgrößen erklärt sich auch näherungsweise der Prozesszustand (der Verdampfung) im aktuellen Arbeitspunkt (Index i) und ermöglicht sich die angenäherte Bestimmung der Parameter $K_{EXV}$, $K_P$ und $c_p''$ sowie der Enthalpie des Kältemittels im Sättigungszustand h".

Damit kann die Virtuelle Kälteleistung des Verdampfers für die gewählte Regelgröße $DT_1$ oder $T_Ü$ nach Formel (1) oder (2) bestimmt werden:

$$\dot{Q}_{Wv,i} = \left( DT_1 \cdot K_P \cdot c_p'' + h'' \right)_i \cdot K_{EXV} \cdot y_{EXV,i} \qquad (1)$$

oder

$$\dot{Q}_{Wv,i} = \left( T_Ü \cdot c_p'' + h'' \right)_i \cdot K_{EXV} \cdot y_{EXV,i} \qquad (2)$$

Die Signalwerte und prozessspezifischen Kennwerte in Formel (1) und (2) sind:

- $T_V(p_V)$ = Temperatur des Kältemittels unter Annahme des Sattdampfzustands mit dem Sattdampfdruck $p_V$;
- $T_{nV}$ = Temperatur des Kältemittels am Verdampferaustritt;
- $T_{L,e}$ = Temperatur des Luftstroms am Verdampfereintritt;
- $T_Ü$ = Überhitzungstemperatur des Kältemittels ($T_Ü$ = $T_{nV}$ - $T_V$);
- $DT_1$ = Differenztemperatur ($DT_1$ = $T_{L,e}$ - $T_V$);
- h"($p_V$) = Sattdampf-Enthalpie des Kältemittels im Verdampfer;

- $c_p''(p_V)$ = spezifische Wärmekapazität des Kältemittels bei Sattdampf;
- $y_{EXV}$ = Stellhub $y_{EXV}$ des Expansionsventils;
- $K_{EXV}$ = Korrektur-Koeffizient, ventilspezifisch bestimmt, ergibt sich aus Formel (3):

$$K_{EXV} = \left[ \frac{\dot{Q}_{Wr}}{y} \cdot \frac{1}{h''} \right]_{EXV,max} \qquad\qquad (3)$$

mit der realen Wärmeleistung $\dot{Q}_{Wr}$, welche aus den Ventil-Daten für maximalen Hub $y_{EXV} = y_{EXV, max}$ bestimmbar ist;

- $K_P$ = Proportionalitätsfaktor zwischen der Überhitzungstemperatur $T_{Ü}$ und der Temperaturdifferenz $DT_1$, der experimentell zu bestimmen ist;

- Index i = kennzeichnet aktuellen Arbeitspunkt i, d.h. die Lage von $\dot{Q}_{Wv,i}$ im Bereich $\dot{Q}_{Wv} = 0 ... \dot{Q}_{Wv,max}$ $(y_{EXV, max})$.

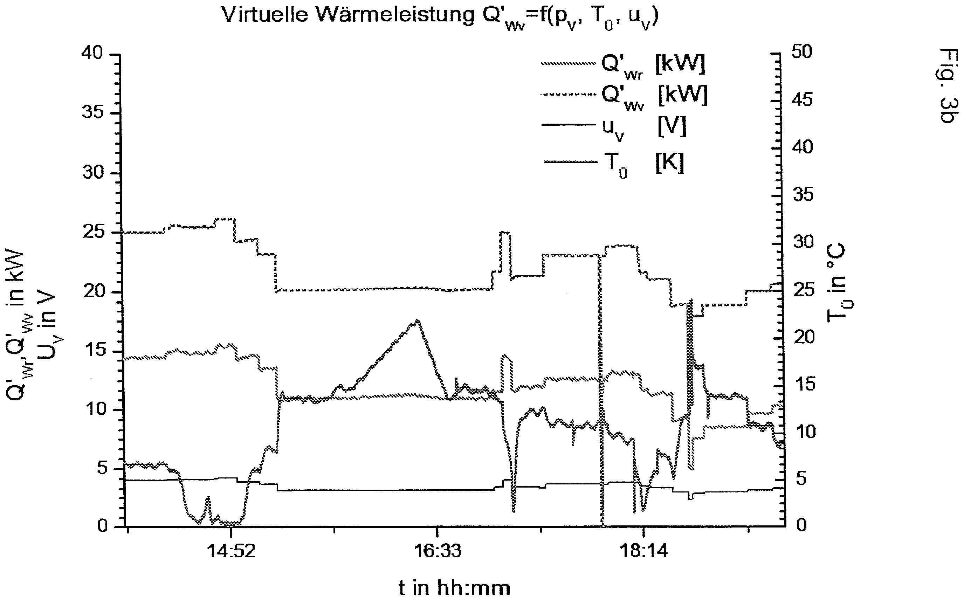

Indem die Enthalpie h" mit der Temperatur des Kältemittels im Verdampfer $T_V$ verknüpft ist, besteht auch ein in Näherung proportionaler Zusammenhang mit der Überhitzungstemperatur, wie dies Fig. 3b gut erkennen lässt. Durch die mit Formel (3) erklärte Bestimmung des arbeitspunktabhängigen Parameters $K_{EXV, i}$ werden auch zustandsabhängige Eigenschaften des Kältemittels und damit des Verdampfungsprozesses berücksichtigt.

Die Funktionen (1) und (2) sind für den gleichen Zweck nutzbar, da sich die Temperaturen $DT_1$ und $T_{Ü}$ in Näherung zueinander proportional verhalten, wie dies auch Fig. 3a zeigt. Die beiden Größen sind über den Zusammenhang $T_{Ü} = K_P \cdot DT_1$ verbunden.

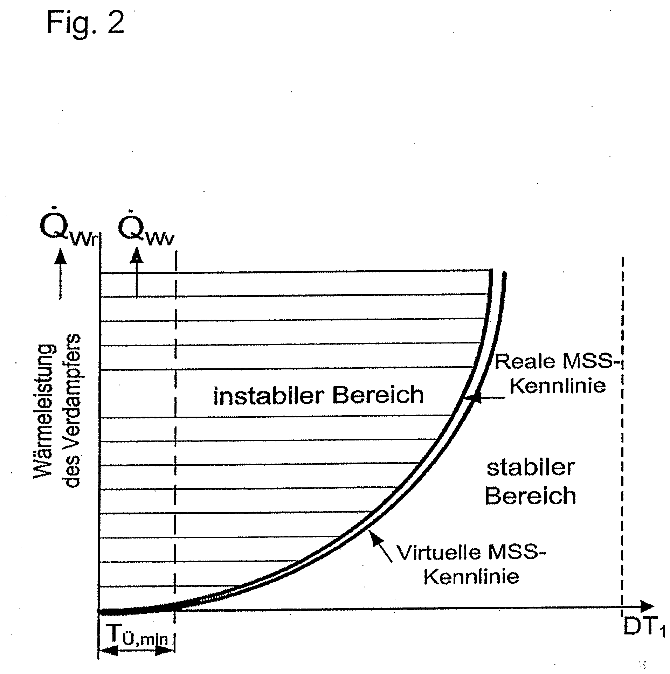

Eine MSS-Kennlinie stellt eine Funktion für die Abhängigkeit der für die Überhitzung des Kältemittels im Verdampfer benötigten Kälteleistung von der Überhitzungstemperatur $T_{Ü}$ oder der Temperaturdifferenz $DT_1$ dar, wenn der Kreisprozess im Kältemittelkreis eine Grenzlage zwischen stabiler und instabiler Arbeitsweise einnimmt. Durch Fig. 2 erfolgt eine grafische Funktionsbeschreibung.

Fig. 2 veranschaulicht den Verlauf der MSS-Kennlinie, die bei Kenntnis der realen Wärme- bzw. Kälteleistung als Funktion $\dot{Q}_{Wr}(DT_1)$ dargestellt ist und bei angenäherter Berechnung der virtuellen Wärme- bzw. Kälteleistung als Funktion $\dot{Q}_{Wv}(DT_1)$ die virtuelle MSS-Kennlinie bildet. Erkennbar unterteilt die MSS-Kennlinie den Funktionsbereich in einen stabilen und einen instabilen Teilbereich.

Fig. 3a zeigt die durch Messung aufgenommenen Verläufe von u.a. den beiden möglichen Regelgrößen $T_{Ü}$ = Signal Dtoh-Ist und $DT_1$ = Signalgröße $DT_1$-Ist, woraus deren angenäherte Proportionalität gut erkennbar ist und darauf hinweist, dass prinzipiell beide Regelgrößen für die Regelung des Verdampfungsprozesses geeignet sind. Wie bereits durch die Formeln (1) und (2) erklärt, kann in Näherung die virtuelle Wärme- bzw. Kälteleistung durch den proportionalen Zusammenhang von TÜ und DT1 in der Form TÜ = KP · DT1 wahlweise ermittelt werden.

Fig. 3b stellt die proportionalen Verläufe von realer und virtueller Wärme-bzw. Kälteleistung aus einer Messdatenaufzeichnung, die außerdem die Größen Überhitzungstemperatur TÜ und das Eingangssignal uV, d.h. den Stellgrößenverlauf des Expansionsventils enthält dar.

Die MSS-Kennlinie wird durch den Zusammenhang $\dot{Q}_W(T_{Ü,MSS})$ erklärt, die reale Funktion kann aber mit den nach Fig. 1 verfügbaren Messgrößen nicht bestimmt werden.

Die durch das Verfahren bestimmte Virtuelle MSS-Kennlinie $\dot{Q}_{Wv}(DT_{1,MSS})$ oder $\dot{Q}_{Wv}(T_{Ü,MSS})$ ist eine Ersatzfunktion zur Real-Kennlinie $\dot{Q}_{Wr}(DT_{1,MSS})$ oder $\dot{Q}_{Wr}(T_{Ü,MSS})$ und aus dem Zusammenhang nach Formel (1) oder Formel (2) bestimmbar. Indem die Virtuelle MSS-Kennlinie mittels Auswertung messbarer Merkmale zur Erkennung des MSS-Zustands in jedem Arbeitspunkt daraufhin geprüft wird, ob die durch Messung erkannte MSS-Situation auch durch die Virtuelle MSS-Kennlinie erklärt ist, kann mittels Parameteränderung von $K_{EXV}$ eine Anpassung an den realen Prozesszustand und damit an die Reale MSS-Kennlinie erfolgen. Diese Funktionsannäherung sichert zugleich eine zyklische Anpassung des Sollwerts der Regelgröße an sein prozesszustands- bzw. arbeitspunkt-abhängiges Optimum.

Im Weiteren wird die Verfahrensbeschreibung insbesondere auf die erfindungsgemäße Verwendung der Regelgröße $DT_1$ reduziert.

Wie bereits vorstehend beschrieben wurde, veranschaulicht Fig. 2 eine MSS-Kennlinie schematisch durch den in seiner typischen Form möglichen realen Verlauf und die virtuelle Ersatzfunktion, welche näherungsweise die gleiche Charakteristik wie die reale Funktion besitzt und daher als "virtuelle MSS-Kennlinie" bezeichnet ist.

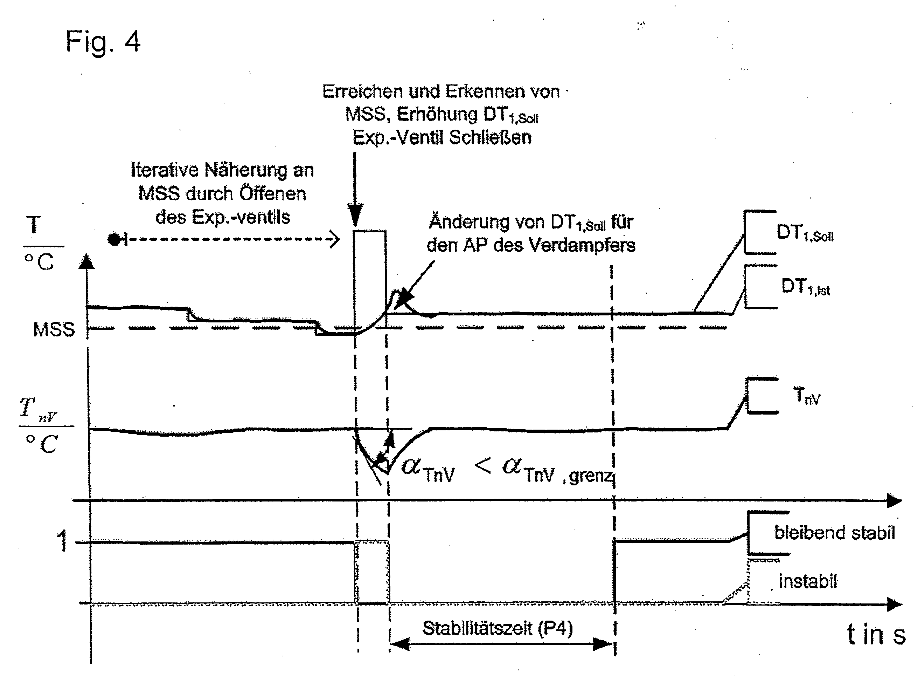

Diese erkennbare Proportionalität im Verlauf von realer und virtueller Kälteleistung des Verdampfers geht auch aus dem in Fig. 4 abgebildeten Diagramm für einen Vergleich mit realen Messdaten hervor.

Fig. 4 erklärt die durch das Verfahren genutzte Möglichkeit, aus dem Verlauf der Temperatur TnV des Kältemittels am Verdampferaustritt eine instabile Prozesssituation zu erkennen, indem der Neigungswinkel aT, nV mit einem vorgegebenen Grenzwert verglichen wird. Dadurch stehen für die Erkennung von Instabilität zwei Merkmale zur Verfügung: die Unterschreitung der Grenztemperatur DT1, Soll durch die Temperatur DT1 und die Unterschreitung des Grenzwinkels aT, nV, Grenz.

Grundsätzlich wird der Funktionsbereich von $\dot{Q}_W(DT_1)$ durch die MSS-Kennlinie $\dot{Q}_W(DT_{1,MSS})$ in einen stabilen Bereich, für den die Temperatur $DT_1 > DT_{1, MSS}$ gilt, und in einen instabilen Bereich, für den $DT_1 < DT_{1, MSS}$ gilt, unterteilt.

Im stabilen Bereich ist die im Verdampfer erreichte Überhitzung des Kältemittels so groß, dass die Temperatur $T_{nV}$ über der von $p_V$ abgeleiteten Sättigungstemperatur liegt und dadurch das Kältemittel am Verdampferaustritt keinen Flüssiganteil besitzt.

Ist die Überhitzungstemperatur ($T_Ü = T_{nV} - T_V$) deutlich höher als die für $DT_1 = DT_{1,\,Soll}$ erforderliche Temperatur, dann ist die Energiezufuhr für den Verdampfungsprozess zu groß und damit nicht optimal. Im instabilen Bereich wird dem Kältemittel für die Verdampfung zu wenig Energie zugeführt und führt dazu, dass am Verdampferaustritt der Kältemitteldampf Flüssiganteile enthält.

Die Reale MSS-Kennlinie kennzeichnet das energetische Optimum für den Verdampfer-Betrieb, stellt aber mit dem Wert der Regelgröße $DT_1 = DT_{1,\,MSS}$ einen labilen Zustand dar, an dem sich analog zu Formel (4) bzw. (5) der Sollwert $DT_{1,\,Soll}$ orientiert. Da selbst bei Kenntnis der üblicherweise nicht gemessenen Größen die Reale MSS-Kennlinie unbekannten Störeinflüssen unterliegt, ist auch diese nicht genau bekannt. Das beschriebene Verfahren benutzt eine iterative Funktion der zyklischen Annäherung der Virtuellen Kälteleistung an die für den MSS-Zustand erforderliche Reale Kälteleistung und impliziert dabei automatisch die in der betrachteten Prozesssituation bestehenden Störeinflüsse.

Die nach dem beschriebenen Verfahren funktionierende Steuer- und Regeleinrichtung wirkt mit ihrer Ausgangsgröße "Stellgröße $y_{EXV}$" auf ein Expansionsventil, welches einen bestimmten Druckverlust für das Kältemittel erzeugt und damit die Temperatur verringert. Die Bestimmung des optimalen Sollwerts für die Regelgröße (Temperaturdifferenz $DT_1$ oder Überhitzungstemperatur $T_Ü$) erfolgt auch dadurch, dass zyklisch der Zustand des Verdampfungsprozesses daraufhin kontrolliert wird, ob die Verdampfung stabil oder instabil arbeitet und der Sollwert der Regelgröße einen solchen Wert hat, dass die Regelgröße im stabilen Arbeitsbereich möglichst dicht an der Virtuellen MSS-Kennlinie liegt.

Dabei sorgt ein in Fig. 2 erklärter vorgebbarer Mindestabstand des Sollwerts, bezeichnet durch $T_{Ü,min}$, im Sinne eines mit technologischer Kenntnis des Prozesses festlegbaren Grenzwertes dafür, dass durch den Verdampfer eine Mindestüberhitzung des Kältemittels erfolgt, um technische Nachteile für die Anlage zu vermeiden.

Die benutzte Virtuelle MSS-Kennlinie bestimmt als Grenzlinie zwischen stabiler und instabiler Arbeitsweise des geregelten Verdampfungsprozesses in jedem Arbeitspunkt die kritische Abhängigkeit zwischen Virtueller Kälteleistung und Regelgröße $\dot{Q}_{WV}=(DT_{1,MSS})$. Damit ist ein Kriterium gebildet für den Sollwert von Temperaturdifferenz $DT_1$ bzw. Überhitzungs-Temperatur $T_Ü$.

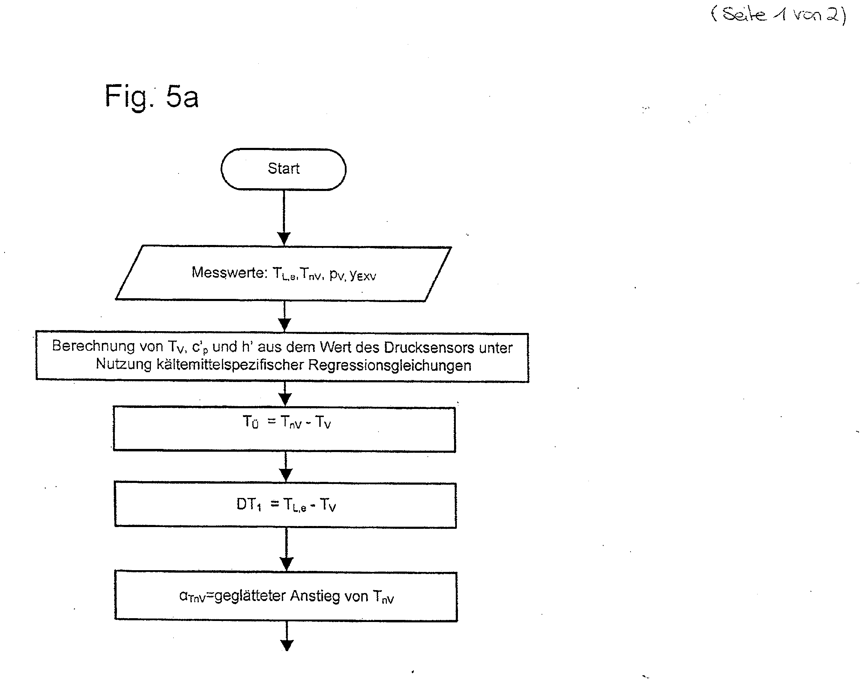

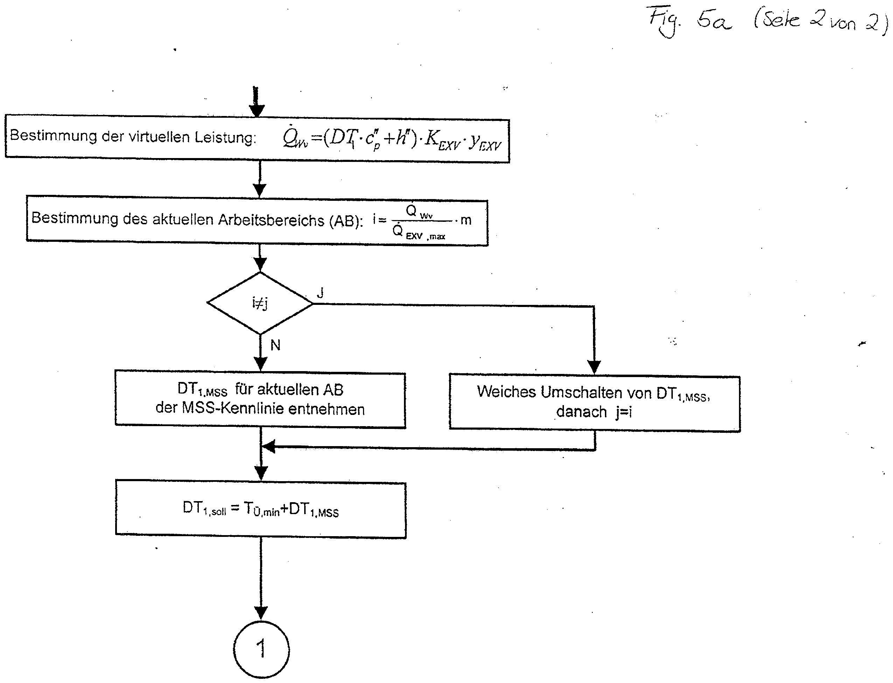

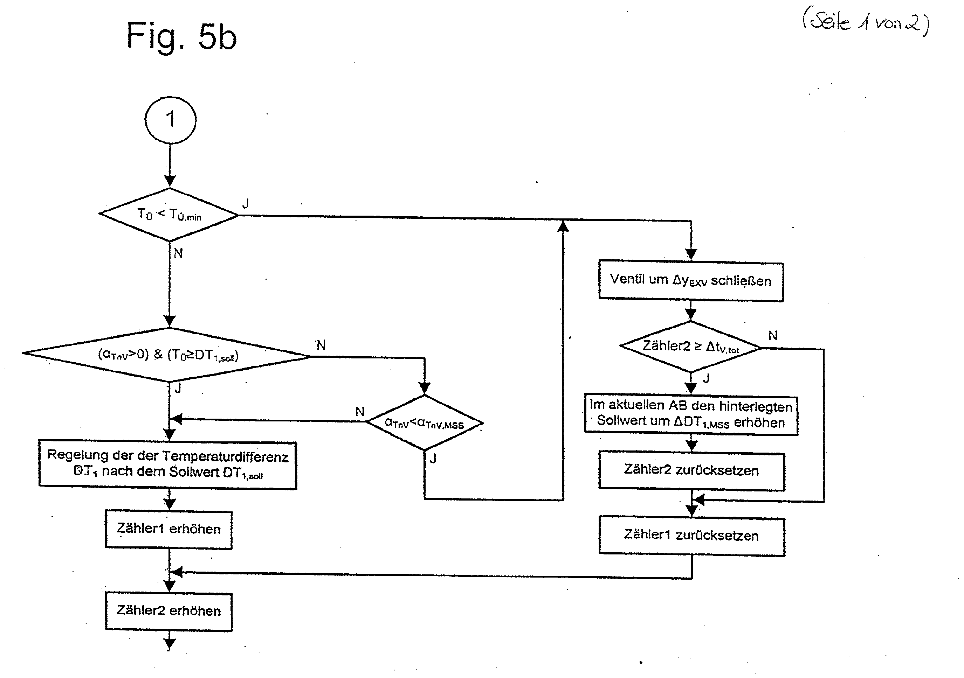

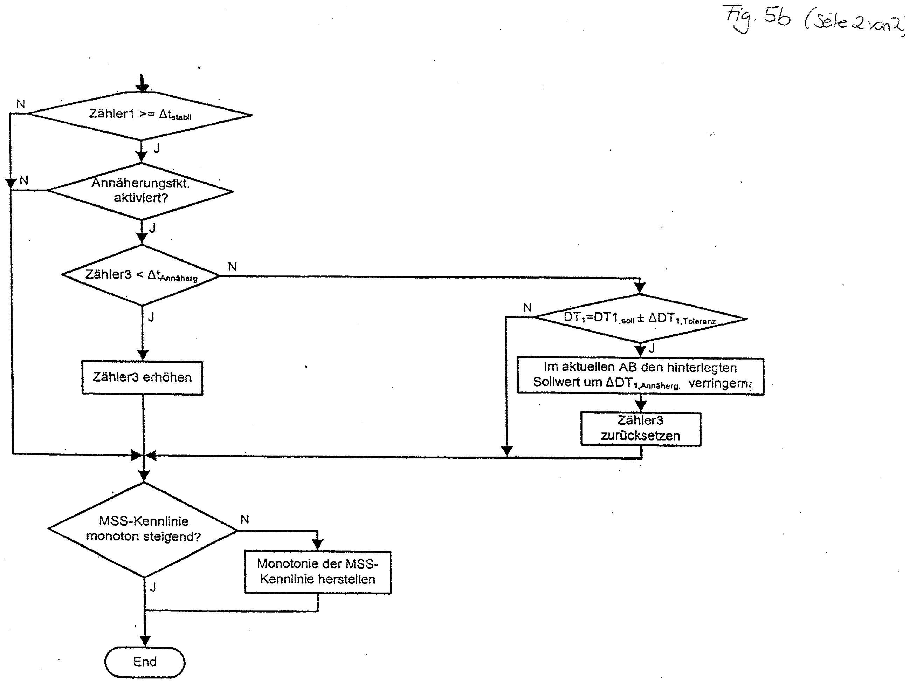

Die virtuelle MSS-Kennlinie ist von durch die Messgrößen nicht sicher erfassten Störeinflüssen abhängig und wird durch eine Funktion der Steuer- und Regeleinrichtung zyklisch so nachgeführt und parametriert, so dass nicht messbare Einflüsse auf den Betriebszustand der Wärmepumpe oder Kälteanlage für den Sollwert der Regelgröße berücksichtigt werden. Diese Nachführungsfunktion für die virtuelle MSS-Kennlinie ist ein wesentliches Funktionsmerkmal der Arbeitsweise nach dem beschriebenen Verfahren. Durch in der Steuer- und Regeleinrichtung realisierte Funktionen können aus den messbaren, bekannten Werten von $T_{nV}$, $p_V$ bzw. $T_V$ und $y_{EXV}$ in jedem Arbeitspunkt i oder Abtastschritt die Temperaturdifferenz $DT_1$, die Überhitzungstemperatur $T_Ü$, die virtuelle Kälteleistung $\dot{Q}_{WV,i}$ sowie der Anstiegswinkel $\alpha_{TnV}$ der Temperatur am Verdampferaustritt $T_{nV}$ bestimmt werden (erklärt in Fig. 4), wie dies auch durch die in Fig. 5a und 5b beschriebene Arbeitsweise der Steuer- und Regeleinrichtung dargestellt ist.

Fig. 5a erläutert mittels des Programmablaufplans die für das Verfahren wichtige Teilfunktion "Sollwertbestimmung" für die Regelgröße, d.h. von $DT_{1,Soll}$ aus dem aktuellen Wert von $DT_1$ auf der virtuellen MSS-Kennlinie, das ist $DT_{1,MSS}$ und dem Vorgabewert $T_{Ü,min}$. Dafür werden aufeinanderfolgend Berechnungen der Werte von Verdampfungstemperatur TV, spezifischer Wärmekapazität cP" des Kältemittels für den mit der Messgröße pV näherungsweise erfassten Sattdampfzustand und der zugehörigen Enthalpie h", der Überhitzungstemperatur $T_Ü$ sowie der Temperaturdifferenz $DT_1$, der Virtueller Leistung $\dot{Q}_{WV}(DT_1)$ und des aktuellen Arbeitsbereichs ausgeführt.

Fig. 5b beschreibt die ebenfalls originär verfahrenstypische Nachführung der MSS-Kennlinie, wodurch automatisch nicht messbare Einflüsse auf den Verdampfungsprozess in die für das technologische Optimum wichtige Sollwertbestimmung einfließen. Dafür kann zunächst eine Stabilitätsprüfung usw. erfolgen.

Gemäß Fig. 5b erfolgt zunächst eine Kontrolle, ob die Bedingung $T_Ü < T_{Ü,min}$ zutrifft und sich der Prozess in einem unzulässigen Zustand befindet. Für den Fall "J=ja" wird das Expansionsventil um den Wert $\Delta y_{EXV}$ so geändert, dass der Mengenstrom des Kältemittels reduziert wird, um den Wert für $T_Ü$ anzuheben. Mit dem Zählparameter "Zähler 2" erfolgt ein Vergleich der Zeitschritte mit der näherungsweise konstanten und vorzugebenden Totzeit $t_{V,tot}$, welche auftritt, wenn sich der Zustand des Verdampfungsprozesses von der MSS-Kennlinie entfernt. Ist "Zähler 2" größer oder gleich $t_{V,tot}$, dann wird der aktuelle Sollwert $DT_{1,Soll}$ um den Wert $\Delta DT_{1,MSS}$ geändert und anschließend "Zähler 2" wieder zurück gesetzt. Wenn "Zähler 2" kleiner als $t_{V,tot}$ ist, dann wird lediglich "Zähler 1" zurückgesetzt. Ergibt der Vergleich von $T_Ü$ mit $T_{Ü,min}$, dass die minimale Überhitzungstemperatur nicht (N) unterschritten ist, dann befindet sich der Verdampfungsprozess im zulässigen Bereich der MSS-Kennlinie.

Mit der Annahme, dass wegen der Regelung näherungsweise gilt: $DT_1 = DT_{1,Soll}$, erfolgt die Bestimmung des dynamischen Parameters Anstieg $\alpha_{TnV}$. Wenn $\alpha_{TnV} > 0$ zutrifft, dann bleibt der Sollwert $DT_{1,Soll}$ für den Regler weiter gültig und der Zählparameter "Zähler 1" für die Anzahl der Zeitschritte zur Erkennung eines stabilen Verdampfungszustands wird erhöht. Ist dagegen $\alpha_{TnV} < \alpha_{TnV,MSS}$, d.h. dem Wert für die Dynamik des Prozesses am MSS-Zustand, dann wird wiederum das Expansionsventil um den Wert $\Delta y_{EXV}$ verstellt, um die Stabilität zu sichern.

Nach dieser beschriebenen Kontrolle, wie und ob sich der Prozess an der MSS-Kennlinie befindet wird die Arbeitsweise der permanent wirksamen Annäherung an den MSS- Zustand erklärt, indem für den aktuellen Arbeitsbereich durch Auswertung der Funktion $\dot{Q}_{WV} = f(DT_1 \pm \Delta DT_{1,Toleranz})$ eine Nachführung des Sollwerts $DT_{1,Soll}$ um den Korrekturwert $\Delta DT_{1,Annäherg}$ als erforderlich erkannt wird oder nicht, um durch den Regler den Prozess wieder in die Nähe der MSS-Kennlinie zu bringen. Dazu erfolgt zunächst eine Kontrolle, ob der Zählparameter "Zähler 1" >= $\Delta t_{stabil}$ ist, wobei $\Delta t_{stabil}$ eine mit beliebigem Wert vorzugebende Größe ist, die das dynamische Verhalten eines Verdampfers bzw. der Wärmepumpe berücksichtigt und eine Aussage erlaubt, ob sich der Verdampfungsprozess über diese Mindestzeitdauer von $\Delta t_{stabil}$ in einem stabilen Zustand befindet. Wenn die Bedingung für "Zähler 1" erfüllt ist wird weiterhin kontrolliert, ob gerade noch ein Annäherungsvorgang aus dem vorhergehenden Arbeitsschritt aktiv ist.

Wird die Annäherungsfunktion gestartet, dann erfolgt zunächst die Kontrolle, ob der Zählparameter "Zähler 3" kleiner ist als die Vorgabezeit für ein Annäherungsintervall $\Delta t_{Annäherg}$. Wenn die Bedingung gilt: "Zähler 3" < $\Delta t_{Annäherg}$, dann wird der Wert für "Zähler 3" erhöht, ist die Bedingung nicht erfüllt, dann erfolgt die oben beschriebene Kontrolle, ob sich der aktuelle Wert für $T_{Ü}$ im Toleranzbereich $\pm \Delta T_{Ü,Toleranz}$ befindet und eine eventuell erforderliche Sollwertänderung. Danach wird kontrolliert, ob die MSS-Kennlinie monoton steigend verläuft. Wenn dies zutrifft, ist die Nachführung beendet. Ist hingegen die Monotonie-Bedingung nicht erfüllt, beginnt eine sichere Rückführung in den stabilen Arbeitsbereich, um die Monotonie wieder zu sichern.

Daraus leitet sich auch eine selbsttätige Stabilitätsprüfung als Funktionsmerkmal der Steuer- und Regeleinrichtung ab. Als durch das beschriebene Verfahren genutzte Merkmale für einen stabilen Prozesszustand in einem beliebigen Arbeitspunkt i werden der in Fig. 4 erklärte Anstiegswinkel $\alpha_{TnV}$ und der Abstand der Temperaturdifferenz $DT_{1,i}$ oder der Überhitzungstemperatur $T_{Ü,i}$ von deren Grenzwerten $DT_{1,MSS,i}$ bzw. $T_{Ü,MSS,i}$ bestimmt.

Ein Punkt der virtuellen MSS-Kennlinie $\dot{Q}_{WV}(DT_{1MSS})$ wird bestätigt, wenn der Wert der virtuellen Kälteleistung $\dot{Q}_{WV,i}$ aus den bekannten Werten im Arbeitspunkt i zu einem Wert der Temperaturdifferenz $DT_{1,i}$ bzw. der Überhitzungstemperatur $T_{Ü,i}$ gehört, der genau auf der virtuellen MSS-Kennlinie liegt, so dass die Bedingung erfüllt ist: $DT_{1,i} = DT_{1,MSS,i}$ bzw. $T_{Ü,i} = T_{Ü,MSS,i}$.

Zeigt sich, dass diese Bedingung nicht erfüllt ist und zugleich $\alpha_{TnV}$ auf instabiles Verhalten hinweist, so wird in einem oder mehreren Änderungsschritten der Wert für $DT_{1,MSS,i}$ bzw. $T_{Ü,MSS,i}$ so korrigiert, dass für $\dot{Q}_{WV,i}$ ein Punkt der virtuellen MSS-Kennlinie zugeordnet werden kann.

Wird im Arbeitspunkt i der bestehende Grenzwert $DT_{1,MSS,i}$ bzw. $T_{Ü,MSS,i}$ durch den aktuellen Messwert $DT_{1,i}$ bzw. $T_{Ü,i}$ überschritten, d.h. der Verdampfungsprozess arbeitet stabil, aber die zugeführte Energie aus der Wärmequelle (Luftstrom) ist höher als benötigt, erfolgt durch den Regler eine solche Verstellung am Expansionsventil, die eine Erhöhung des Kältemittel-Mengenstroms bewirkt.

Zugleich wird, wenn dies erforderlich ist, pro Zyklus der Sollwert $DT_{1,Soll,i}$ bzw. $T_{Ü,Soll,i}$ um $\Delta DT_{1,i}$ bzw. $\Delta T_{Ü,i}$ geändert. Dies erfolgt iterationsartig in mehreren Zyklen so lange, bis der Prozesszustand der Stabilitätsgrenze so nahe gekommen ist, dass die Bedingung $DT_{1,i} \approx DT_{1,i,MSS}$ bzw. $T_{Ü,i} \approx T_{Ü,MSS,i}$ erreicht ist.

Wird hingegen die Unterschreitung des Wertes $DT_{1,MSS,i}$ bzw. $T_{Ü,MSS,i}$ festgestellt, d.h. ein instabiler Prozesszustand erkannt, dann wird vom Regler der Kältemittel-Mengenstrom so lange verringert, bis ebenfalls der Prozesszustand der Stabilitätsgrenze so nahe gekommen ist, dass $DT_{1,i} \approx DT_{1,i,MSS}$ bzw. $T_{Ü,i} \approx T_{Ü,MSS,i}$ erfüllt ist. Damit ist die als Stabilitätsgrenze erkennbare Virtuelle MSS-Kennlinie $\dot{Q}_{WV}(DT_{1MSS})$ in jedem Prozesszustand das für die Sollwertbestimmung entscheidende Kriterium.

Indem die Kontrolle und Korrektur der virtuellen MSS-Kennlinie für jeden abgetasteten Arbeitspunkt i erfolgt, realisiert sich durch das Verfahren eine quasi permanente selbsttätige Nachführung der Basisfunktion für die Bestimmung des optimalen Sollwerts $DT_{1,Soll,i}$ bzw. $T_{Ü,Soll,i}$ gemäß Formel (4) bzw. (5).

Die durch die virtuelle MSS-Kennlinie festgelegte kritische Temperaturdifferenz $DT_{1,MSS}$ bzw. Überhitzungstemperatur $T_{Ü,MSS}$ ist eine vom Prozesszustand abhängige Variable und berücksichtigt Änderungen des Prozessverhaltens für verschiedene Arbeitspunkte und Störungssituationen im Verdampfungsprozess.

Ein optimales Betriebsverhalten des Verdampfers wird dadurch gesichert, dass der Sollwert für die Regelgröße ($DT_{1Soll}$ bzw. $T_{Ü,Soll}$) sich aus Formel (4) bzw. (5) mit einem Mindestabstand $T_{Ü,min}$ vom MSS-Punkt des Verdampfungsprozesses ergibt,

$$DT_{1,Soll} = DT_{1,MSS} + T_{Ü,min} \qquad (4)$$

$$T_{Ü,Soll} = T_{Ü,MSS} + T_{Ü,min} \qquad (5)$$

wobei die Offset-Größe $T_{Ü,min}$ einen anlagenspezifisch festzulegenden Wert zugewiesen bekommt, durch den zugleich sichergestellt wird, dass eine technisch und technologisch geforderte Mindest-Überhitzung im Verdampfer erfolgt.

Mit der Kenntnis von $DT_{1,MSS,i}$ bzw. $T_{Ü,MSS,i}$ ist also auch der Sollwert $DT1_{Soll,i}$ bzw. $T_{Ü,Soll,i}$ mit einem gesicherten Abstand zur Stabilitätsgrenze festgelegt. Damit wird der Verdampfungsprozess in allen Arbeitspunkten dicht entlang der MSS-Kennlinie, stabil und mit bestmöglichem Wirkungsgrad realisiert. Durch den variablen Wert $T_{Ü,min}$ ist

zugleich eine Parametergröße gegeben, durch die Einfluss auf die Schwingungsneigung des geregelten Verdampfungsprozesses genommen wird.

Zudem wird eine günstige Arbeitsweise der Regelung dadurch unterstützt, dass die Regelgröße eine zulässige Schwankungsbreite (Toleranz) um den Sollwert von $\pm \Delta DT_{1,\, Tol}$ bzw. $\pm \Delta T_{\ddot{U},\, Tol}$ zugewiesen erhält, die nicht oder nur geringe Änderungen der Stellgröße $y_{EXV}$ durch den Regler zur Folge hat.

Durch Stellbewegungen des Reglers angeregte Schwingungen bzw. Schwankungen der Prozessgrößen und der Stelleinrichtung lassen sich bei anlagenspezifisch günstiger Festlegung der wählbaren Parameter weitgehend vermeiden, wobei eine weiterhin vorhandene Nachführungssteuerungsfunktion für eine allmähliche, quasistetige Sollwertänderung sorgt.

Für einen Abtastzyklus, d.h. Messgrößenabtastung des Verdampfungsprozesses in den aufeinanderfolgenden Punkten i und j, kann eine Änderung der Temperaturdifferenz $DT_{1,\, MSS}$ bzw. der Überhitzungstemperatur $T_{\ddot{U},\, MSS}$ und des Sollwerts $DT_{1,\, Soll}$ bzw. $T_{\ddot{U},\, Soll,\, i}$ nach Formel (6) bzw. (7) bestimmt werden:

$$\Delta T_{DT1,Zykl} = \frac{DT_{1,MSS,i} - DT_{1,MSS,j}}{t_{Ausgl}} \cdot T \qquad (6)$$

bzw.

$$\Delta T_{T\ddot{U},Zykl} = \frac{T_{\ddot{U},MSS,i} - T_{\ddot{U},MSS,j}}{t_{Ausgl}} \cdot T \qquad (7)$$

in der $t_{Ausgl}$ eine vorzugebende Zeitdauer für einen Umschaltvorgang von $DT_{1,\, Soll}$ bzw. $T_{\ddot{U},\, soll,i}$ zwischen zwei Arbeitspunkten oder -bereichen ist.

Durch eine weitere Steuerungsfunktion wird sichergestellt, dass die Virtuelle MSS-Kennlinie wie die Reale MSS-Kennlinie einen den physikalischen Zusammenhängen entsprechenden monotonen Funktionsverlauf einhält.

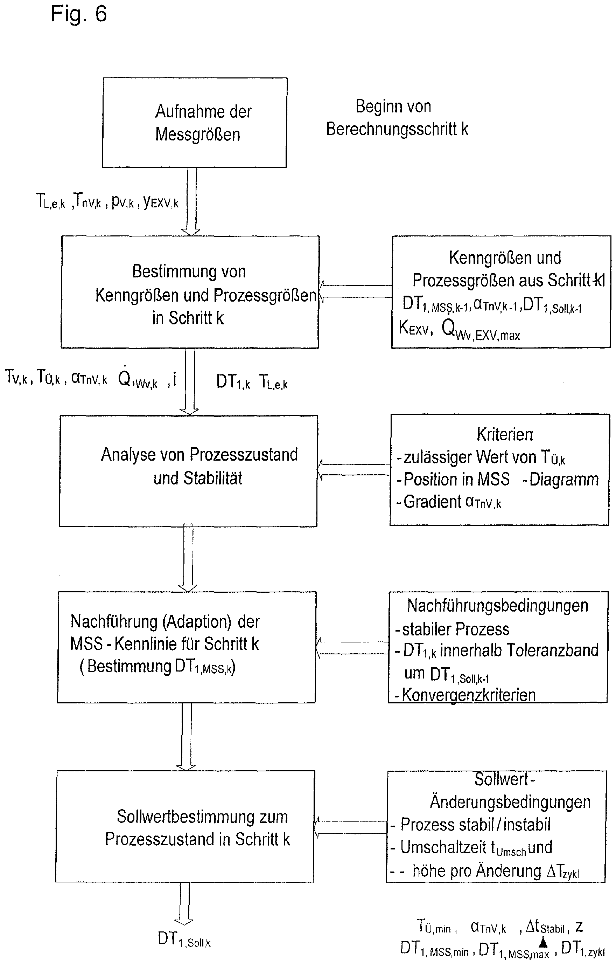

In Fig. 6 wird anhand einer Block-Darstellung des Ablaufes der funktionswichtigsten Aktivitäten eine vereinfachte, kompakte Erläuterung des seiner Funktionsweise nach energiebilanzgesteuerten Reglers für Verdampfungsregelungen von Wärmepumpen gegeben.

Durch Erfassen des energetischen Bilanzzustands der Anlage mittels Sensoren, die beispielsweise Druck/Temperatur am Ein-/Ausgang des Verdampfers sowie den Stellhub des Expansionsventils abtasten, kann der Zustand des Systems bestimmt werden.

Funktionsbereich Überwachung:

In der komplex wirkenden Überwachungs-, Steuer- und Regeleinrichtung sind die Funktionen von Steuerung, Regelung und Überwachung zum Teil miteinander verknüpft.

Durch den Funktionsbereich Überwachung werden ausgewählte Prozesseigenschaften mittels Auswertung der auch bereits für den Funktionsbereich Steuerung und Regelung benannten Prozessgrößen automatisch beobachtet und für die Prozessbewertung geeignete Prozessparameter als Signale erzeugt, die für eine Information an die Prozess-Betriebsführung oder an eine spezielle Steuerungs- oder Regelungsfunktion genutzt werden.

Eine solche für den Betrieb von luftbeaufschlagten Verdampfern in Wärmepumpen und Kälteanlagen signifikante Prozesseigenschaft ist die Vereisung der luftseitigen Verdampfer-Oberfläche. Die Kenntnis von stattfindender Vereisung ist für die Betriebsführung sehr wichtig, weil sie die energetische Effizienz und die Verfügbarkeit der Anlage beeinflusst.

Eine Vereisung ist insbesondere dann zu erwarten, wenn die dem Verdampfer zugeführte Luft eine Temperatur $T_{L,\, e}$ von weniger als + 5 °C hat und verläuft bei höherer relativer Luftfeuchtigkeit intensiver. Der Vereisungsvorgang ist in seinem zeitabhängigen Verlauf vom Zustand der für die Verdampfung zugeführten Luft abhängig.

An der Verdampfer-Oberfläche bildet sich durch eine Taupunktunterschreitung Kondensat, welches durch den Wärmeentzug zunehmend vereist, anfänglich eine Reifbildung verursacht und mit zunehmender Betriebsdauer zu einer geschlossenen Eisschicht (Vergletscherung) führen kann.

Während Kondensat und eine Bereifungsschicht aus gefrorenem Kondensat zunächst den Wärmeübergang verbessern, wodurch $DT_{1,\, Soll}$ geringer sein kann, wird mit Bildung einer geschlossenen Eisschicht auf der Verdampfer-Oberfläche der Wert für $DT_{1,\, Soll}$ durch den Regler angehoben, um den dann schlechteren Wärmeübergang $\alpha_{V,\, L}$ an der luftseitigen Verdampferoberfläche zu kompensieren.

Eine Vergletscherung führt durch die Minderung des Wärmeübergangs zu einer Verschlechterung des Wirkungsgrads für den Verdampfungsprozess. Diese Verminderung der übertragenen Wärmeleistung, bezogen auf bestimmte variable Betriebsbedingungen, kann aus der nach Formel (1) bzw. (2) ermittelten virtuellen Kälteleistung erkannt werden.

Weil bei verringertem Wert von $\alpha_{V,L}$ durch den beschriebenen Regler der Sollwert für die Differenztemperatur DT1$_{Soll}$ automatisch angehoben wird, ist die Vereisung auch an einer Änderung von DT$_{1,\,Soll}$ erkennbar.

Die Vereisung ist in Anlehnung an die Beschaffenheit der luftseitigen Verdampferoberfläche in folgende Stufen unterscheidbar:

1. Oberfläche trocken
2. Kondensatbildung
3. Gefrierendes Kondensat als Reifbildung
4. Geschlossene Eisschicht (Vergletscherung)

Eine weitere Verbesserung für die Bewertung des Vereisungsgrades wird erreicht, indem DT$_{1,\,Soll}$ beim Anfangszustand (1. Stufe) als Bezugsgröße DT$_{1,\,Soll,min}$ benutzt und die Verhältnisgröße DT$_{1,Soll}$' nach Formel (8)

$$DT_{1,Soll}' = \frac{DT_{1,Soll}}{DT_{1,Soll,\min}} \qquad (8)$$

gebildet wird.

Diesem Ansatz liegt zugrunde, dass sich die von der Lufttemperatur $T_{L,e}$, der relativen Luftfeuchtigkeit $\varphi_{L,e}$ und der im Kondensator aus dem Kältemittel abfließenden Wärmeleistung (erkennbar aus der Differenz von eintritts- und austrittsseitiger Temperatur des vom Kondensator beheizten Mediums) beeinflussten Betriebsbedingungen während eines Betriebszyklus nur wenig ändern.

Zu Beginn eines Betriebszyklus wird bei nicht vereister Verdampferoberfläche mit der Bezugsgröße DT$_{1,\,Soll,\,min}$ der unter den aktuellen Bedingungen günstigste Sollwert erfasst. Bei erheblich veränderten Betriebsbedingungen sollte DT$_{1,\,Soll,\,min}$ erneut bestimmt werden. Durch Messdatenauswertung von Betriebszyklen mit unterschiedlichen Betriebsbedingungen kann eine Nachführungsfunktion benutzt werden, welche zu beliebiger Betriebsdauer innerhalb eines Zyklus veränderte Betriebsbedingungen erkennt und den dafür zutreffenden Wert für DT$_{1,\,Soll,\,min}$ ermittelt.

Diese Funktion wird ebenfalls in der Steuer- und Regeleinrichtung realisiert.

Dazu wird eine tabellarische oder andere mathematische Funktionserfassung angelegt und die Erfassung der die Betriebsbedingungen bestimmenden Parameterwerte aus einer dafür angelegten Speicherfunktion entnommen.

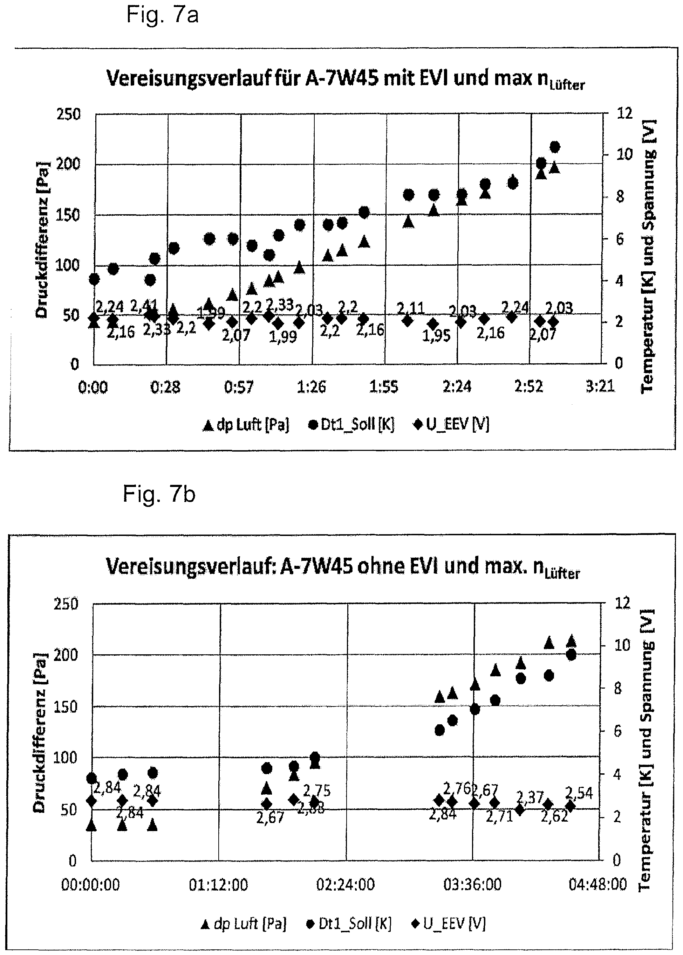

Fig. 7a und Fig. 7b zeigen jeweils Messdaten aus Untersuchungen zur Vereisungsbeobachtung, aus denen erkennbar ist, dass zwar die dafür speziell gemessene Druckdifferenz des Luftstroms über der Verdampfungseinrichtung $\Delta pL$ = Signal dp-Luft eine sehr deutliche Information zum Vereisungsverlauf liefert, aber in proportionaler Näherung ersetzt werden kann durch den Verlauf von DT$_{1,Soll}$. Der Sollwert DT$_{1,soll}$ wird mit zunehmender Vereisung der Verdampfer-Oberfläche durch die Funktion der Sollwert-Nachführung des Reglers erhöht, um dadurch den zunehmenden Wärmeübertragungswiderstand zwischen Luft und Kältemittel so zu kompensieren, dass eine sichere Verdampfung des Kältemittels erhalten bleibt. Die ebenfalls in die Diagramme aufgenommene Stellgröße uV ändert sich u.U. zu gering und ist stark von der Dimensionierung des Expansionsventils abhängig.

Insbesondere zeigen Fig. 7a und 7b beispielhaft den Vereisungsverlauf bei der Lufttemperatur von $T_{L,\,e}$ = -7 °C am Lufteintritt des Verdampfers und einer Austrittstemperatur von 45 °C des Heizkreises am Kondensator, wobei die Verläufe von Temperatursollwert DT$_{1,\,Soll}$ (Punkte) und Differenzdruck $\Delta p_L$ (Dreiecke) über den Lüfter des Verdampfers von proportionaler Ähnlichkeit sind. Der Differenzdruck reagiert auf die zunehmende Vereisung mit nahezu monotonem Anstieg und ist als zuverlässiger Indikator für die Vereisung geeignet, steht aber in der Praxis nicht als Messgröße zur Verfügung. Die Temperatur DT$_1$ unterliegt in Ihrem Verlauf stärker den anderen Einflüssen auf die Kältemitteltemperatur am Verdampfereintritt und sollte daher über eine Zykluszeit zwischen 1 Minute und 5 Minuten gemittelt werden. Indem ein zeitlicher Mittelwert für DT$_1$ gebildet wird kann der Verlauf in guter Näherung monoton verarbeitet werden.

Die ebenfalls eingetragenen Messwerte (Rhomben) zeigen den zugehörigen Verlauf des Stellsignals für das Expansionsventil.

Die Information über eine Vereisung ist durch die Auswertung des DT$_1$-Verlaufs sowohl dann gegeben, wenn die Wärmepumpe eine EVI-Struktur (EVI: "enhanced vapour injection") hat als auch dann, wenn dies nicht der Fall ist, wie ein Vergleich der Diagramme in den Figs. 7a und 7b zeigt.

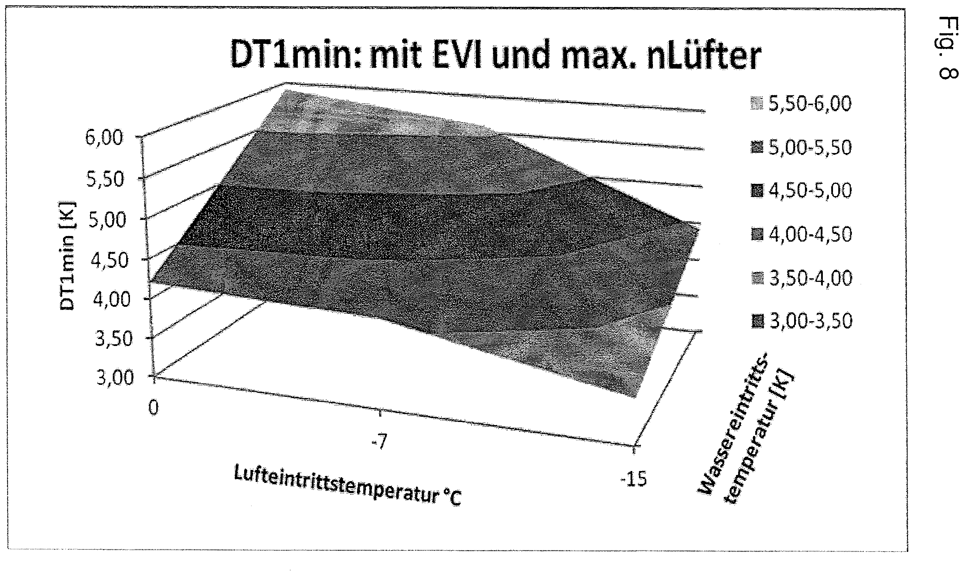

Fig. 8 zeigt den Zusammenhang zwischen dem Sollwert der Regelgröße DT$_1$ bei nicht vereistem Verdampfer (DT$_{1,\,Soll,\,min}$ = DT$_{1,\,min}$ in Fig. 8) mit der Luft-Eintrittstemperatur $T_{L,\,e}$ und der Eintrittstemperatur $T_{W,\,e}$ des Wassers im Heizkreis am Kondensator. Dabei stellt Fig. 8 die Abhängigkeit des Sollwerts der Temperaturdifferenz DT$_{1,\,Soll}$ von den Einflussgrößen Lufttemperatur $T_{L,e}$ und Wassereintrittstemperatur $T_{W,e}$ am Kondensator bei nicht vereistem Verdampfer dar, wobei dann dieser spezielle Sollwert als $DT_{1,Soll,min}$ = Signalgröße $DT_{1,min}$ bezeichnet ist. Die Darstellung in Fig. 8 verweist darauf, dass für die Bestimmung des Arbeitspunktes die Abhängigkeit von den Größen $T_{L,e}$ und $T_{W,e}$ gut nutzbar ist. Die Größe $DT_{1,min}$ in Fig. 8 entspricht der in der Beschreibung durch $DT_{1,Soll,min}$ bezeichneten Größe, Lüfterdrehzahl $n_{Lüfter}$ ist konstant.

Es ist zu erkennen, dass bei konstanter Wasseraustrittstemperatur in den angeschlossenen Heizkreis und mit sinkender Wassereintrittstemperatur am Kondensator sowie mit steigender Lufteintrittstemperatur am Verdampfer die treibende Temperaturdifferenz $DT_{1,Soll}$ zunimmt. Dieser Zusammenhang ist jedoch nicht linear, so dass sich für die Realisierung dieser Abhängigkeit als Basis der im Regler realisierten Funktionsweise für die Bestimmung von $DT_{1,Soll}$ eine adäquate Kennlinie anbietet. Diese hat zudem den Vorteil der einfachen Integration von Expertenwissen oder der Bildung einer Lernfunktion.

Die relative Feuchtigkeit der Luft am Eintritt des Verdampfers hat ebenfalls Einfluss auf die erforderliche Temperaturdifferenz $DT_1$ und deren Sollwert bei nicht vereistem Verdampfer $DT_{1,Soll,min}$.

Für Arbeitspunkte mit einer Lufteintrittstemperatur $t_{L,e}$ zwischen 0 °C und -7°C ist ein Abfallen des $DT_1$-Sollwertes durch steigende Feuchtigkeit prägnant.

Die maximale Abweichung beträgt aber nicht wesentlich mehr als 1K und liegt damit im Bereich der üblichen Messungenauigkeit. Eine technische Nutzung dieser Messgröße ist daher nur bei sorgfältiger Fehlerberücksichtigung zu empfehlen.

Für die mögliche technische Nutzung einer Vereisungsbeobachtung und - meldung durch eine leittechnische Funktion ist die Bestimmung und funktionelle Verwertung zur Informationserzeugung und steuerungstechnischen Nutzung folgender Prozessgrößen grundsätzlich möglich:

    1. Die messbare Temperaturdifferenz $DT_1$;
    2. Die messbare Überhitzungstemperatur $T_{Ü}$;
    3. Durch Bildung der virtuellen Kälteleistung $\dot{Q}_{Wv}$ des Verdampfers.

Entscheidend für eine technische Nutzbarkeit und Bildung der Funktions-bzw. Verfahrensbasis ist die Reproduzierbar der Beobachtungsergebnisse unter den jeweils bestehenden Arbeitsbedingungen des Verdampfers und eine hinreichende Empfindlichkeit der genutzten Signalgröße für prozessinterne und äußere Änderungen der Betriebsbedingungen, das sind insbesondere Störgrößen und veränderte Anlageneigenschaften.

Bestehende Erfahrungen zeigen an, dass die auch als "treibende" bezeichnete Temperaturdifferenz $DT_1$ in besonderer Weise für eine messtechnisch gestützte Beobachtung von Vereisungsvorgängen an den luftbeaufschlagten Verdampfern geeignet ist.

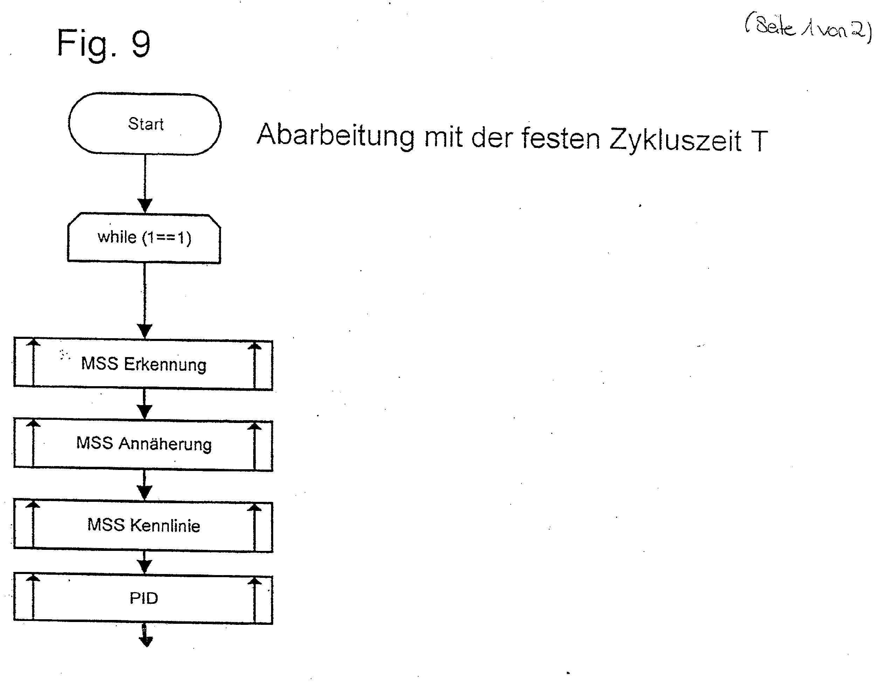

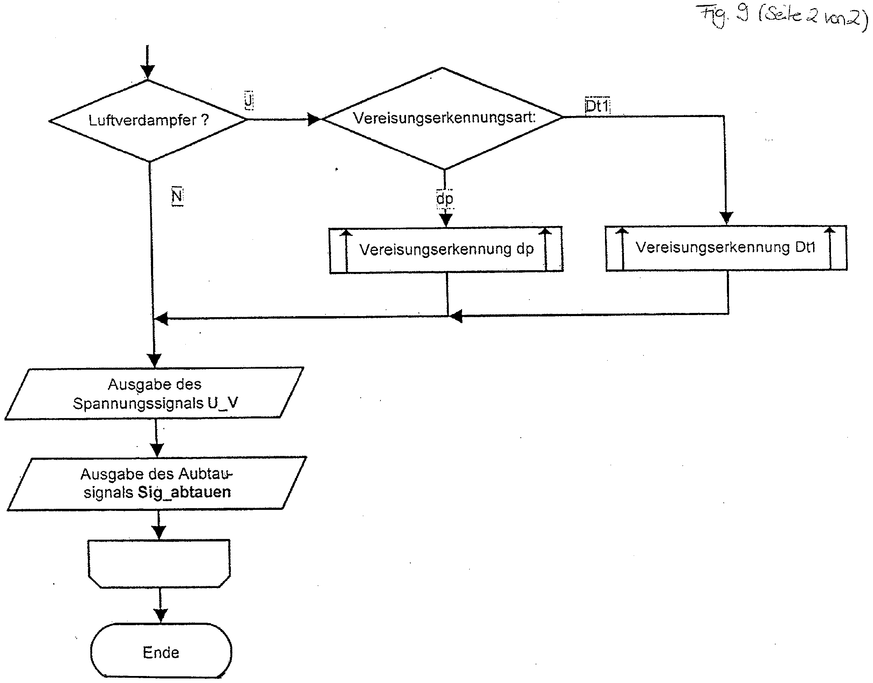

In Fig. 9 ist erklärt, wie sich die leittechnische Funktion "Vereisungserkennung" in die Funktionsstruktur der Steuer- und Regeleinrichtung einordnet.

Indem diese Funktion aus der Bewertung des Vereisungszustandes einen Signalwert bildet, der keine, geringe oder starke Vereisung anzeigt, kann damit eine Steuerungsfunktion initialisiert werden, die mittels Verstellung des Luftmengenstroms oder Reduzierung der Kondensatorleistung die für die Aufnahme von Wärmeenergie aus der Luft die Betriebszeit verlängern und damit den für die geplante Betriebsdauer wirkenden ökologischen und ökonomischen Vorteil vergrößern kann.

Insbesondere ist in Fig. 9 erläutert, wie sich zu den bereits erklärten Reglerfunktionen die ergänzende Funktion der Vereisungsbeobachtung strukturell in die Funktionsstruktur der Steuer- und Regeleinrichtung einordnet. Durch eine logische Abfrage wird zunächst bestimmt, ob es sich bei der technischen Anlage um eine solche mit Luft-Verdampfer handelt, weil nur in diesem Fall eine Vereisung auftritt. Abhängig von der gegebenen Instrumentierung der Wärmepumpe/Kälteanlage wird die Vereisungbeobachtungsfunktion für die Signalgröße $\Delta pL$ oder für $DT_1$ aktiviert. Dementsprechend kann die Ausgabe des Stellsignals uV in die für Betriebsunterbrechung und Abtauen oder Leistungsreduzierung des Verdampfers vorgesehene Position gebracht und erforderlichenfalls die für das Abtauen oder Maßnahmen zur Beeinflussung der leistungs- oder verfügbarkeitsbestimmenden Parameter erforderlichen Stellhandlungen ausgeführt werden.

Gemäß einem Ausführungsbeispiel arbeitet das Verfahren auf der Basis einer Verdampfer-Regelung für die Regelgröße DT1. Der Sollwert für die Regelgröße, also $DT1_{Soll}$ soll mit Hilfe des Verfahrens so bestimmt werden, dass der Verdampfungsprozess energetisch optimal arbeitet, indem der (kostenverursachende) Energieaufwand für Lüfter und Verdichter minimiert wird, und zwar in jedem Arbeitspunkt, d.h. für jede Lufttemperatur und für jede am Kondensator dem Kältemittelkreis entnommene Leistung.

Da sich das statische und dynamische, d.h. Regelungsverhalten des Verdampfers infolge eines kontinuierlichen Vereisungsprozesses insbesondere bei niedrigeren Temperaturen (kleiner als ca. +5 °C) und abhängig von der Luftfeuchte verändert, indem nach einer trockenen luftseitigen Verdampferoberfläche VOF) beim Start der Wärmepumpe oder Kälteanlage mit dem Startwert $DT1_{Soll,min,0}$ die VOF zunächst durch Kondensat beschlägt, danach eine Reifbildung einsetzt und schließlich eine geschlossene Eisschicht entsteht. Durch Kondensat und Reif wird der luftseitige Wärmeübergang an der VOF zunächst verbessert, was zu einem kleineren optimalen Sollwert gegenüber dem trockenen Zustand führt.

Nach Beginn der Vergletscherung "erkennt" der nach dem erfindungsgemäßen Verfahren arbeitende Regler einen größeren optimalen Sollwert $DT1_{Soll}$ (unter gegebenem Einfluss von Lufttemperatur und Luftfeuchte sowie Kondensator-Leistung), d.h. der Leistungsanteil des Verdichters für den Eintrag der Kälteenergie in den Kältemittelkreis muss sich erhöhen.

Die erfindungsgemäße Art und Weise der Sollwertbestimmung ist umfasst gemäß einem Ausführungsbeispiel insbesondere die Arbeitsschritte des Reglers:

- Bestimmung/Annäherung des Sollwerts für DT1 so, dass der Schnittpunkt von virtueller Kälteleistung $\dot{Q}_{virt,i}$ und Überhitzungstemperatur $T_{Ü,i}$ dicht an der MSS-Kennlinie liegt und dabei
- der Verdampfungsprozess im stabilen Bereich des Diagramms arbeitet, und
- geprüft wird, ob der vom Regler ermittelte optimale Sollwert kleiner oder größer als der bei einer früheren Erreichung dieses Arbeitspunktes ist.

Wenn der Sollwert für $DT_1$ wegen Vergletscherung durch den Regler erhöht wird, dann kann bei Überschreiten eines dafür gesetzten Grenzwerts die Vereisung erkannt werden und als Information an die manuelle oder automatische Betriebsführung genutzt werden, um entweder die Leistung der Wärmepumpe/Kälteanlage zu verringern oder abzuschalten.

Bei rechtzeitiger Verringerung kann die Nutzungsdauer der Anlage (bis zum Erreichen eines energetisch schlechten Zustands) verlängert werden und damit für den Betriebseinsatz mehr Umweltenergie genutzt werden. Der Abschaltzeitpunkt kann außerdem genauer an den Vereisungszustand angepasst werden als mit einer vorgegebenen Ausschaltzeit.

Die durch das Verfahren bestimmte Virtuelle MSS-Kennlinie $\dot{Q}_{WV}(DT_{1,MSS})$ ist eine Ersatzfunktion zur Real-Kennlinie $\dot{Q}_{Wr}(DT_{1,MSS})$ und aus dem Zusammenhang nach Formel (1) oder Formel (2) bestimmbar.

Zu Betriebs-Beginn der Wärmepumpe/Kälteanlage wird bei nicht vereister Verdampferoberfläche mit der Bezugsgröße $DT_{1,Soll,min}$ der unter den aktuellen Bedingungen, d.h. für die gegebenen Werte von Lufttemperatur und -feuchte sowie Betriebslast am Kondensator günstigste Sollwert erfasst. Bei erheblich veränderten Betriebsbedingungen sollte $DT_{1,Soll,min}$ erneut bestimmt werden.

$DT1_{Soll,\,min}$ wird also einmalig zu Betriebsbeginn für die dabei bestehenden Betriebsbedingungen ermittelt und dient als Bezugsgröße für eine Normierung des mit zunehmender Vereisung veränderlichen $DT_{1,soll}$ nach der vorstehenden Formel (8) erkennbar.

Diese Normierung ist nicht zwingend erforderlich, aber von Vorteil für die Vergleichbarkeit und Erkennbarkeit des Vereisungsverlaufs. Für jeden Arbeitspunkt "i" des Verdampfungsprozesses gibt es die dafür vom Regler ermittelten Werte $DT1_{Soll,i}$ und $DT1_{Soll,i}{}^{*}$.

Gemäß einem weiteren Ausführungsbeispiel könnte sich $DT1_{Soll,min}$ durch die Wirkung nicht messbarer (und damit dem Regler unbekannten) Größen ändern. Durch Abspeichern der $DT1_{Soll,i}{}^{*}$ ließen sich solche erkennen.

Gemäß einem Ausführungsbeispiel ist die Grundlage für die Vereisungserkennung die adaptive DT1-Regelung. Diese Regelung passt den DT1-Sollwert an den aktuellen Arbeitspunkt an. Im Fall einer Reif-/Frostbildung verringert sich der Wärmeübertragungskoeffizient des Verdampfers mit zunehmender Frostdicke und der SHC erhöht den DT1-Sollwert, d.h. die treibende Temperaturdifferenz.

Somit wird gewährleistet, dass der Verdampfer die vom Verdichter erzwungene Kälteleistung weiterhin aufbringt. Diese Arbeitspunktanpassung äußert sich in der Verringerung der Ventilspannung, der Verdampfungstemperatur und einer nur ungenau vorhersagbaren sowie arbeitspunktabhängigen Änderung der Verdampferaustrittstemperatur.

Analytische Untersuchungen und die Auswertung vorhandener Messdaten haben gezeigt, dass die treibende Temperaturdifferenz $DT_1$ am empfindlichsten auf die Vereisung reagiert und im Vergleich mit anderen Größen (z.B. Überhitzung) unempfindlicher gegenüber Störwirkungen von zusätzlichen Komponenten (z.B. dem 4-Wege-Umschaltventil) ist. Wird ein zuvor festgelegter Vereisungsfaktor überschritten, wird die Vereisungsmeldung ausgelöst. Da jeder Arbeitspunkt, abhängig von seiner Kälteleistung und den luftseitigen Bedingungen, eine andere optimale treibende Temperaturdifferenz erfordert, kann diese arbeitspunktspezifisch im Algorithmus hinterlegt werden.

Gemäß einem Ausführungsbeispiel der vorliegenden Erfindung ist ein Verfahren für die Steuerung und Regelung des Verdampfungsprozesses in einem luftbeaufschlagten Verdampfer einer Wärmepumpe oder Kühlanlage, bereitgestellt, bei dem der mittels bekannter Prozessgrößen, -merkmale und -parameter beschreibbare Prozesszustand daraufhin bewertet wird, ob eine Vereisung der luftseitigen Verdampferoberfläche besteht, indem aus der Lage des Arbeitspunktes i, gegeben durch den Wert der virtuellen Wärmeleistung $[\dot{Q}_{WV}(DT_1 \text{ oder } T_{Ü})]_i$ in der virtuellen MSS-Kennlinie und aus dem Neigungswinkel $\alpha_{TnV}$ der Zeitfunktion der Temperatur $T_{nV}(t)$ die Stabilitätsgrenze des Verdampfungsprozesses erkannt wird, wobei die SollwertBestimmung insbesondere für die wählbare Regelgröße $DT_1$ oder $DT_1$

/ $T_Ü$ oder ($T_L \cdot y_V$) / $T_{nV}$ möglich ist, wobei vorzugsweise anstelle der Größe $DT_1$ deren auf den minimalen Sollwert unter den gegebenen Prozessbedingungen $DT_{1,Soll, min}$ bezogene Größe genutzt werden sollte, wodurch die Zusammenhänge begründet werden:

$$DT_1* = \frac{DT_1}{DT_{1,Soll,\min}} \quad , \quad \frac{DT_1*}{T_Ü} \quad \text{und} \quad \frac{T_L \cdot y_V}{T_{nV}}$$

und im Falle einer Vereisung die Leistung der Wärmepumpe durch Verstellen von $DT_{1,Soll}$ oder einer anderen für die Leistungsreduktion geeigneten Größe (z.B. des Wärmeabflusses am Kondensator) verringert wird und damit die effektive Nutzungsdauer der Wärmepumpe zu steuern.

Weiterhin können mittels der Messgrößen Luft-Eintrittstemperatur $T_{L,e}$ vor dem Vordampfer, Druck $p_V$ des Kältemittels im Verdampfer, der Temperatur des Kältemittels $T_{nV}$ am Verdampferaustritt und des Eingangssignals $u_V$ für den Stellhub $y_V$ des Expansionsventils die Prozessgrößen Temperatur im Verdampfer $T_V$ ($p_V$), Überhitzungstemperatur $T_Ü$ des Kältemittels, Temperaturdifferenz $DT_1$, spezifische Wärmekapazität $c''_p(p_V)$ und spezifische Enthalpie $h''(p_V)$ des Kältemittels bestimmt werden sowie die Temperaturdifferenz $DT_1$, die virtuelle Wärme- bzw. Kälteleistung der Verdampfungseinrichtung $\dot{Q}_{Wv}$, die Verhältnisgröße DT1 / $T_Ü$ und die Funktion ($T_L \cdot y_V$) / $T_{nV}$ benutzt werden, um den Prozesszustand auf Vereisung hin zu bewerten, und damit auf der Grundlage der Bildung einer virtuellen Energiestrom-Bilanz erfolgt, die sich durch eine die selbsttätige Annäherung ausführende Steuerung proportional zur realen Energiestrom-Bilanz verhält und das Prozessverhalten in der Nähe der virtuellen MSS-Kennlinie bewertet, wodurch sowohl der Sollwert der Regelgröße in der Nähe des energetischen Optimums des Verdampfungsprozesses optimal gesichert wird als auch eine mögliche Vereisung der luftseitigen Verdampfer-Oberfläche erkannt und für die Steuerung der die Leistung der Wärmepumpe oder Kälteanlage beeinflussenden Stellgrößen Lüfterdrehzahl bzw. -leistung, übertragener Wärmestrom am Kondensator der Verdichterleistung und des Volumenstroms des Kältemittels verwendet wird.

**Patentansprüche**

1. Verfahren für die Steuerung und Regelung der Temperaturdifferenz ($DT_1$) zwischen der Eintrittstemperatur von Luft ($T_{L,e}$) und der Eintrittstemperatur eines Kältemittels ($T_V$) in einer Verdampfungseinrichtung einer Wärmepumpe oder Kälteanlage, mit den Schritten:

   Bilden einer virtuellen Energiestrom-Bilanz für die Bestimmung einer virtuellen Kälteleistung der Verdampfungseinrichtung;
   Bestimmen eines Sollwerts für die Temperaturdifferenz ($DT_{1,Soll}$) zwischen der Eintrittstemperatur von Luft ($T_{L,e}$) und der Eintrittstemperatur des Kältemittels ($T_V$) in der Verdampfungseinrichtung als Regelgröße; und
   Betätigen eines Expansionsventils der Wärmepumpe oder der Kälteanlage, so dass die Temperaturdifferenz ($DT_1$) dem Sollwert für die Temperaturdifferenz ($DT_{1,Soll}$) entspricht;
   wobei die virtuelle Energiestrom-Bilanz derart gebildet wird, dass sich die virtuelle Energiestrom-Bilanz in allen Arbeitspunkten der Wärmepumpe oder Kühlanlage näherungsweise proportional zur realen Energiestrom-Bilanz verhält, indem die virtuelle Kälteleistung der Verdampfungseinrichtung ($\dot{Q}_{Wv}$) durch eine funktionelle Abhängigkeit von den bekannten Größen Temperaturdifferenz ($DT_1$), Überhitzungstemperatur ($T_Ü$) als Differenz zwischen der Austrittstemperatur ($T_{nV}$) und der Verdampfungstemperatur ($T_V(p_V)$) des Kältemittels in der Verdampfungseinrichtung, spezifische Wärmekapazität ($c''_p(p_V)$) und spezifische Enthalpie ($h''(p_V)$) des Kältemittels im Sattdampfzustand, Hub des Expansionsventils ($y_{EXV}$) und einem ventilspezifischen Korrekturfaktor ($K_{EXV}$), der für jeden Arbeitspunkt des Expansionsventils gebildet wird, gebildet wird, so dass die virtuelle Kälteleistung ($\dot{Q}_{Wv}$) des Verdampfers für die gewählte Regelgröße Temperaturdifferenz ($DT_1$) oder Überhitzungstemperatur ($T_Ü$) nach Formel (1) oder (2) bestimmt werden:

$$\dot{Q}_{Wv,i} = \left(DT_1 \cdot K_P \cdot c''_p + h''\right)_i \cdot K_{EXV} \cdot y_{EXV,i} \qquad (1)$$

$$\dot{Q}_{Wv,i} = \left(T_Ü \cdot c''_p + h''\right)_i \cdot K_{EXV} \cdot y_{EXV,i} \qquad (2)$$

   wobei $K_P$ der Proportionalitätsfaktor zwischen der Überhitzungstemperatur (Tü) und der Temperaturdifferenz (DT1), der experimentell zu bestimmen ist,
   wobei der Index (i) den aktuellen Arbeitspunkt kennzeichnet und wobei sich der ventilspezifische Korrektur-Koeffizient ($K_{EXV}$) mit der realen Wärmeleistung ($\dot{Q}_{Wr}$), welche aus den Ventil-Daten für maximalen Hub ($y_{EXV}$

$$K_{EXV} = \left[ \frac{\dot{Q}_{Wr}}{y} \cdot \frac{1}{h''} \right]_{EXV,max}$$

= $y_{EXV, max}$) bestimmbar ist, aus der Formel ergibt; und

wobei über den Arbeitsbereich der Wärmepumpe oder Kälteanlage basierend auf der Abhängigkeit zwischen der über die Formel (1) oder (2) bestimmten virtuellen Kälteleistung ($\dot{Q}_{WV}$) und der Temperaturdifferenz ($DT_1$) an der tatsächlichen Stabilitätsgrenze der geregelten Wärmepumpe oder Kälteanlage ($[\dot{Q}_{WV}(T_{Ü})]_{StG}$), welche anhand des Anstiegswinkels über die Zeit ($\alpha_{TnV}$) der Temperatur am Verdampferaustritt und dem Abstand der Überhitzungstemperatur ($T_{Ü,i}$) von dem Grenzwert ($T_{Ü,MSS,i}$) in jedem Arbeitspunkt (i) bestimmt wird, eine virtuelle Kennlinie ($[\dot{Q}_{WV}(DT_1)]_{MSS}$) gebildet wird, und die Funktionswerte der Temperaturdifferenz zwischen der Eintrittstemperatur von Luft ($T_{L,e}$) und der Eintrittstemperatur eines Kältemittels ($T_V$) in der Verdampfungseinrichtung auf der virtuellen Kennlinie ($DT_{1,MSS}$), die bei bekannter virtueller Kälteleistung ($\dot{Q}_{WV}$) aus der Funktion für die virtuelle Kennlinie ($[\dot{Q}_{WV}(DT_1)]_{MSS}$) bestimmbar sind, für die Bestimmung des Sollwerts für die Temperaturdifferenz ($DT_{1,Soll}$) genutzt werden,

weiterhin mit den Schritten:

Normieren des bestimmten Sollwerts für die Temperaturdifferenz ($DT_{1,Soll}$) mittels eines zu gegenwärtigen Umgebungsbedingungen für den günstigsten Sollwert bei unvereister Verdampferoberfläche ermittelten Referenzwerts ($DT_{1,Soll,min}$) über die Beziehung $DT_{1,Soll}{}^* = DT_{1,Soll}/DT_{1,Soll,min}$;
Vergleichen des normierten Werts ($DT_{1,Soll}{}^*$) mit einem voreingestelltem Referenzwert, um so den Verlauf einer Vereisung der Verdampferoberfläche zu erkennen; und
Bestimmen, dass eine Vereisung der luftseitigen Verdampferoberfläche vorliegt, wenn der normierte Wert ($DT_{1,Soll}{}^*$) den Referenzwert übersteigt.

2. Verfahren nach Anspruch 1, wobei der bestimmte Sollwert für die Temperaturdifferenz ($DT_{1,Soll}$) eines bestimmten Arbeitspunkts (i) als arbeitspunktspezifischer Wert ($DT_{1,Soll,min,i}$) gespeichert wird, wobei der Arbeitspunktbezug in Abhängigkeit der Eintrittstemperatur der Luft ($T_{L,e}$) und der Eintrittstemperatur des Kältemittels ($T_V$) gekoppelt mit der Stellgröße am Expansionsventil ($u_V$; $y_{EXV}$) erfolgt.

3. Verfahren nach Anspruch 2, wobei in Abhängigkeit des Arbeitspunktes der Wert des arbeitspunktspezifischen Werts ($DT_{1,Soll,min,i}$) durch Vergleich mit einem zuvor hinterlegten Wert für diesen Arbeitspunkt (i) auf sein Minimum hin geprüft und bei Erkennen eines neuen geringeren Wertes als Minimum ersetzt wird.

4. Verfahren nach einem der Ansprüche 1 bis 3, wobei Signalgrößen gespeichert werden, die eine Vereisung anzeigen, und durch das Speichern der die Vereisung anzeigenden Signalgrößen und in Abhängigkeit der Zeit und der Eintrittstemperatur der Luft ($T_{L,e}$) sowie der am Kondensator messbaren lastsignifikanten Größen ($T_{W,e}$; $T_{W,a}$) ein für die vorhandenen Einflussgrößen gültiger Modellverlauf des Prozessverhaltens während eines Vereisungsvorgangs erzeugt wird, der bei wiederholt gleichen oder näherungsweise gleichen Werten der erfassten Prozessgrößen für die Bestimmung einer solchen am Kondensator abgegebenen Wärmeleistung zugrunde gelegt wird, so dass für die Wärmepumpe oder Kälteanlage eine geforderte Zeitdauer bis zur Vereisung verfügbar ist.

5. Verfahren nach Anspruch 1, wobei der voreingestellte Referenzwert eine veränderbare Empfindlichkeitseinstellung für die Vereisungserkennungsfunktion aufweist.

6. Verfahren nach einem der Ansprüche 1 bis 5, wobei der Sollwert der Regelgröße für die Temperaturdifferenz ($DT_{1,Soll}$) außer von dem Wert ($DT_{1,MSS}$) weiterhin über die Beziehung $DT_{1,Soll}=DT_{1,MSS}+T_{Ü,min}$ von einem anla-genspezifisch festzulegenden Wert der Überhitzungstemperatur ($T_{Ü,min}$) abhängt, der einen Mindestwert der Überhitzungstemperatur ($T_{Ü}$) darstellt, damit ein stabiler Zustand der Wärmepumpe oder Kälteanlage erreicht wird.

7. Verfahren nach Anspruch 6, wobei eine Stabilitätskontrolle dadurch erfolgt, dass eine Überschreitung der virtuellen Kennlinie aus dem stabilen Arbeitsbereich kommend festgestellt wird, indem eine instabile Prozesssituation aus dem Überschreiten einer als Grenzwert festgelegten Neigung des Zeit-Verlaufs der Temperatur ($T_{nV}$) des Kältemittels am Verdampferaustritt bestimmt wird.

8. Verfahren nach Anspruch 7, wobei bei Erkennung einer instabilen Prozesssituation eine zusätzliche Überhöhungs-

temperatur ($DT_{1,instab}$) dem Sollwert für die Temperaturdifferenz ($DT_{1,Soll}$) hinzuaddiert wird, um damit ein schnelles Schließen des Expansionsventils zu erreichen und den Regelungsprozess in den stabilen Arbeitsbereich zu überführen.

9. Verfahren nach einem der Ansprüche 1 bis 8, **dadurch gekennzeichnet, dass** die Arbeitsweise des Prozesses und der Regeleinrichtung selbsttätig daraufhin kontrolliert wird, ob diese sich im stabilen Arbeitsbereich befindet, indem mittels auf messbare Größen und Parameter gestützten statischen und dynamischen Merkmalen die Stabilität bzw. Instabilität festgestellt wird, wobei in jedem der mit einem zeitlichen Abstand T aufeinanderfolgend aufgenommenen Prozesszustände eine selbsttätige Korrektur der virtuellen Kennlinie um den Wert ($\Delta DT_{1,MSS}$) erfolgt, wodurch eine Anpassung an die im jeweiligen Arbeitspunkt tatsächlich bestehenden aber nicht direkt messbaren Prozesseigenschaften erreicht wird und somit die virtuelle Kennlinie proportional zur realen Stabilitätskennlinie verläuft.

10. Verfahren nach Anspruch 9, weiterhin mit den Schritten:

   Festlegen von Toleranzbändern für die Werte der messbaren und rechnerisch rekonstruierbaren Größen über festlegbare Zeitabschnitte ($\Delta t_{stabil}$), innerhalb denen die Stabilität des Verdampfungsprozesses gewährleistet ist; und
   Durchführen einer Korrektur des Sollwerts für die Temperaturdifferenz ($DT_{1,Soll}$) und/oder der Kennlinie wenn festgestellt wird, dass mindestens eines der Toleranzbänder verlassen wird.

11. Verfahren nach Anspruch 10, wobei die Korrektur des Sollwerts ($DT_{1,Soll}$) oder von Punkten der virtuellen Kennlinie derart erfolgt, dass der Sollwert für die Temperaturdifferenz ($DT_{1,Soll}$) stetig geändert wird, so dass ein vorbestimmter Schwellenwert eines Schwankungsausmaßes der Prozessgrößen nicht überschritten wird.

**Claims**

1. Method for the control and regulation of the temperature difference ($OT_1$) between the inlet temperature of air ($T_{L,e}$) and the inlet temperature of a refrigerant ($T_V$) in an evaporation device of a heat pump or refrigeration installation, comprising the steps of:

   forming a virtual energy flow balance for the determination of a virtual refrigeration power of the evaporation device;
   determining, as a regulating variable, a target value for the temperature difference ($DT_{1,Soll}$) between the inlet temperature of air ($T_{L,e}$) and the inlet temperature of the refrigerant ($T_V$) in the evaporation device; and
   actuating an expansion valve of the heat pump or of the refrigeration installation such that the temperature difference ($DT_1$) corresponds to the target value for the temperature difference ($DT_{1,Soll}$);
   wherein the virtual energy flow balance is formed such that, at all operating points of the heat pump or cooling installation, the virtual energy flow balance is approximately proportional to the real energy flow balance in that the virtual refrigeration power of the evaporation device ($\dot{Q}_{Wv}$) is formed by a functional dependence on the known variables of temperature difference ($DT_1$), overheating temperature ($T_ü$) as the difference between the outlet temperature ($T_{nV}$) and the evaporation temperature ($T_V(p_V)$) of the refrigerant in the evaporation device, specific heat capacity ($c''_p(p_V)$) and specific enthalpy ($h''(p_V)$) of the refrigerant in the saturated steam state, lift of the expansion valve ($y_{EXV}$) and a valve-specific correction factor ($K_{EXV}$), which is formed for each operating point of the expansion valve, such that the virtual refrigeration power ($\dot{Q}_{Wv}$) of the evaporator is determined for the selected regulating variable of temperature difference ($DT_1$) or overheating temperature ($T_ü$) according to formula (1) or (2):

$$\dot{Q}_{Wv,i} = (DT_1 \cdot K_P \cdot c''_p + h'')_i \cdot K_{EXV} \cdot y_{EXV,i} \qquad (1)$$

$$\dot{Q}_{Wv,i} = (T_ü \cdot c''_p + h'')_i \cdot K_{EXV} \cdot y_{EXV,i} \qquad (2)$$

where Kp is the factor of proportionality between the overheating temperature ($T_ü$) and the temperature difference ($DT_1$) and has to be determined experimentally, where the index (i) indicates the current operating point, and where the valve-specific correction coefficient ($K_{EXV}$) is obtained using the real heat power ($\dot{Q}_{Wr}$), which can be determined from the valve data for maximum lift ($y_{EXV} = y_{EXV,\,max}$), from the formula $K_{EXV} =$

$$\left[\frac{\dot{Q}_{Wr}}{y} \cdot \frac{1}{h''}\right]_{EXV,\,max}\;;\quad \text{and}$$

wherein, over the operating range of the heat pump or refrigeration installation, a virtual characteristic curve ($[\dot{Q}_{Wv}(DT_1)]_{MSS}$) is formed based on the dependence between the virtual refrigeration power ($\dot{Q}_{Wv}$), determined via the formula (1) or (2), and the temperature difference ($DT_1$) at the actual stability limit of the regulated heat pump or refrigeration installation ($[\dot{Q}_{Wv}(T_Ü)]_{StG}$), which limit is determined on the basis of the rising angle over time ($\alpha_{TnV}$) of the temperature at the evaporator outlet and the difference between the overheating temperature ($T_{Ü,i}$) and the limit value ($T_{Ü,MSS,i}$) at each operating point, and the function values of the temperature difference between the inlet temperature of air ($T_{L,e}$) and the inlet temperature of a refrigerant ($T_V$) in the evaporation device on the virtual characteristic curve ($DT_{1,MSS}$), which values are able to be determined for known virtual refrigerant power ($\dot{Q}_{Wv}$) from the function for the virtual characteristic curve ($[\dot{Q}_{Wv}(DT_1)]_{MSS}$), are used for the determination of the target value for the temperature difference ($DT_{1,Soll}$),

furthermore comprising the steps of:

 normalizing the determined target value for the temperature difference ($DT_{1,Soll}$) by means of a reference value ($DT_{1,Soll,min}$) via the relationship $DT_{1,Soll}{}^* = DT_{1,Soll}/DT_{1,Soll,min}$, said reference value being determined for the most favourable target value for the current ambient conditions, with the evaporator surface not being in a frosted state;

 comparing the normalized value ($DT_{1,Soll}{}^*$) with a preset reference value in order thus to detect the profile of an icing of the evaporator surface; and

 determining that an icing of the air-side evaporator surface is present if the normalized value ($DT_{1,Soll}{}^*$) exceeds the reference value.

2. Method according to Claim 1, wherein the determined target value for the temperature difference ($DT_{1,Soll}$) of a specific operating point (i) is stored as an operating-point-specific value ($DT_{1,Soll,min,i}$), wherein the operating-point relationship in dependence on the inlet temperature of the air ($T_{L,e}$) and the inlet temperature of the refrigerant ($T_V$) is realized in a manner coupled with the actuating variable at the expansion valve ($u_V$; $y_{EXV}$).

3. Method according to Claim 2, wherein, in dependence on the operating point, the value of the operating-point-specific value ($DT_{1,Soll,min,i}$) is checked in terms of its minimum by comparison with a previously stored value for this operating point (i), and is replaced as the minimum in the event of a new lower value being detected.

4. Method according to one of Claims 1 to 3, wherein signal variables which indicate icing are stored and, by the storage of the signal variables which indicate the icing and in dependence on the time and on the inlet temperature of the air ($T_{L,e}$) and also on the variables ($T_{W,e}$; $T_{W,a}$) which are significant in terms of load and which are measurable at the condenser, there is generated a model profile, valid for the existing influencing variables, of the process behaviour during an icing process, which profile, in the case of repeatedly identical or approximately identical values of the detected process variables, is used as a basis for the determination of such a heat power which is output at the condenser, with the result that a required period of time until the icing is available for the heat pump or refrigeration installation.

5. Method according to Claim 1, wherein the preset reference value has a variable sensitivity setting for the icing detection function.

6. Method according to one of Claims 1 to 5, wherein, apart from the value ($DT_{1,MSS}$), the target value of the regulating variable for the temperature difference ($DT_{1,Soll}$) furthermore depends, via the relationship $DT_{1,Soll} = DT_{1,MSS} + T_{Ü,min}$, on a value of the overheating temperature ($T_{Ü,min}$), which is to be defined in an installation-specific manner and which represents a minimum value of the overheating temperature ($T_Ü$), in order that a stable state of the heat pump or refrigerant installation is achieved.

7. Method according to Claim 6, wherein a stability control is realized in that an exceedance of the virtual characteristic curve, when coming from the stable operating range, is established in that an unstable process situation is determined from the exceedance of a slope of the time profile of the temperature ($T_{nV}$) of the refrigerant at the evaporator outlet, which slope is defined as a limit value.

8. Method according to Claim 7, wherein, in the case of an unstable process situation being detected, an additional excessive temperature ($DT_{1,instab}$) is added to the target value for the temperature difference ($DT_{1,Soll}$) in order thereby to achieve a rapid closure of the expansion valve and to transfer the regulation process to the stable operating range.

9. Method according to one of Claims 1 to 8, **characterized in that** the mode of operation of the process and of the regulating device is automatically checked as to whether this is in the stable operating range **in that** the stability or instability is established by means of static and dynamic features which are based on measurable variables and parameters, wherein, in each of the process states, which are recorded one after the other with a time interval T, an automatic correction of the virtual characteristic curve by the value ($\Delta DT_{1,MSS}$) is realized, whereby an adaptation to the process properties which actually exist, but are not directly measureable, at the respective operating point is achieved, and thus the virtual characteristic curve runs in a manner proportional to the real stability characteristic curve.

10. Method according to Claim 9, furthermore comprising the steps of:

defining tolerance bands for the values of the measurable and computationally reconstructible variables via definable time periods ($\Delta t_{stabil}$) within which the stability of the evaporation process is ensured; and correcting the target value for the temperature difference ($DT_{1,Soll}$) and/or the characteristic curve if a departure from at least one of the tolerance bands is established.

11. Method according to Claim 10, wherein the correction of the target value ($DT_{1,Soll}$) or of points on the virtual characteristic curve is realized such that the target value for the temperature difference ($DT_{1,Soll}$) is changed continuously, so that a predefined threshold value of a measure of variation of the process variables is not exceeded.

**Revendications**

1. Procédé pour la commande et le réglage de la différence de température ($DT_1$) entre la température d'entrée de l'air ($T_{L,e}$) et la température d'entrée d'un fluide frigorigène ($T_V$) dans un dispositif d'évaporation d'une pompe à chaleur ou d'une installation frigorifique, comprenant les étapes suivantes :

formation d'un bilan virtuel du flux énergétique pour la détermination d'une puissance de réfrigération virtuelle du dispositif d'évaporation ;
détermination d'une valeur de consigne pour la différence de température ($DT_{1,Soll}$) entre la température d'entrée de l'air ($T_{L,e}$) et la température d'entrée du fluide frigorigène ($T_V$) dans le dispositif d'évaporation en tant que grandeur de réglage ; et
actionnement d'une soupape de détente de la pompe à chaleur ou de l'installation de réfrigération, de telle sorte que la différence de température ($DT_1$) corresponde à la valeur de consigne pour la différence de température ($DT_{1,Soll}$) ;
le bilan virtuel du flux énergétique étant formé de telle sorte que le bilan virtuel du flux énergétique se comporte dans tous les points de travail de la pompe à chaleur ou de l'installation de réfrigération approximativement de manière proportionnelle au bilan réel du flux énergétique, en ce que la puissance de réfrigération virtuelle du dispositif d'évaporation ($\dot{Q}_{Wv}$) est formée par une dépendance fonctionnelle des grandeurs connues de la différence de température ($DT_1$), de la température de surchauffe ($T_{\ddot{U}}$) en tant que différence entre la température de sortie ($T_{nV}$) et la température d'évaporation ($T_{V}(p_V)$) du fluide frigorigène dans le dispositif d'évaporation, de la capacité thermique spécifique ($c''_p(p_V)$) et de l'enthalpie spécifique ($h''(p_V)$) du fluide frigorigène dans l'état de saturation de vapeur, de la course de la soupape de détente ($y_{EXV}$) et d'un facteur de correction spécifique à la soupape ($K_{EXV}$), qui est formé pour chaque point de travail de la soupape de détente, de telle sorte que la puissance de réfrigération virtuelle ($\dot{Q}_{Wv}$) de l'évaporateur pour la grandeur de réglage sélectionnée, la différence de température ($DT_1$) ou la température de surchauffe ($T_{\ddot{U}}$), soient déterminées en fonction de la formule (1) ou (2) :

$$\dot{Q}_{W_{V,i}} = (DT_1 \cdot K_P \cdot c''_p + h'')_i \cdot K_{EXV} \cdot y_{EXV,i} \qquad (1)$$

$$\dot{Q}_{W_{V,i}} = (T_{ü} \cdot c''_p + h'')_i \cdot K_{EXV} \cdot y_{EXV,i} \qquad (2)$$

$K_p$ étant le facteur de proportionnalité entre la température de surchauffe (Tü) et la différence de température (DT1), qui doit être déterminé par expérimentation, l'indice (i) étant le point de travail actuel et le coefficient de correction spécifique à la soupape ($K_{EXV}$) avec la puissance thermique réelle ($\dot{Q}_{Wr}$), qui peut être déterminée à partir des données de soupape pour la course maximale ($y_{EXV} = y_{EXV, max}$), s'obtenant à partir de la formule

$$K_{EXV} = \left[ \frac{\dot{Q}_{Wr}}{y} \cdot \frac{1}{h''} \right] EXV, max \quad ;$$
et

sur la plage de travail de la pompe à chaleur ou de l'installation de réfrigération, sur la base de la dépendance entre la puissance de réfrigération virtuelle ($\dot{Q}_{WV}$) déterminée par le biais de la formule (1) ou (2) et de la différence de température ($DT_1$) à la limite de stabilité effective de la pompe à chaleur réglée ou de l'installation de réfrigération réglée ([$\dot{Q}_{WV}(Tü)$]StG), qui est déterminée à partir de l'angle de montée en fonction du temps ($\alpha_{TnV}$) de la température à la sortie de l'évaporateur et l'écart de la température de surchauffe ($T_{ü,i}$) par rapport à la valeur limite ($T_{ü,MSS,i}$) dans chaque point de travail (i), une courbe caractéristique ([$\dot{Q}_{WV}(DT_1)$]MSS) étant formée, et les valeurs de fonction de la différence de température entre la température d'entrée de l'air ($T_{L,e}$) et la température d'entrée d'un fluide frigorigène ($T_V$) dans le dispositif d'évaporation sur la courbe caractéristique virtuelle ($DT_{1,MSS}$), qui peuvent être déterminées à partir de la fonction pour la courbe caractéristique virtuelle ([$\dot{Q}_{WV}(DT_1)$]MSS) lorsque la puissance de réfrigération virtuelle ($\dot{Q}_{WV}$) est connue, sont utilisées pour déterminer la valeur de consigne de la différence de température ($DT_{1,Soll}$), et comprenant en outre les étapes suivantes :

normalisation de la valeur de consigne déterminée pour la différence de température ($DT_{1,Soll}$) au moyen d'une valeur de référence ($DT_{1,Soll,min}$) déterminée dans les conditions environnantes actuelles pour la valeur de consigne la plus favorable pour une surface de l'évaporateur non givrée, par le biais de la relation $DT_{1,Soll}{}^* = DT_{1,Soll}/DT_{1,Soll,min}$ ;
comparaison de la valeur normalisée ($DT_{1,Soll}{}^*$) avec une valeur de référence préajustée, afin de détecter ainsi l'étendue d'un givrage de la surface de l'évaporateur ; et
détermination du fait qu'un givrage de la surface côté air de l'évaporateur a lieu si la valeur normalisée ($DT_{1,Soll}{}^*$) dépasse la valeur de référence.

2. Procédé selon la revendication 1, dans lequel la valeur de consigne déterminée pour la différence de température ($DT_{1,Soll}$) d'un point de travail déterminé (i) est mémorisée en tant que valeur spécifique à un point de travail ($DT_{1,Soll,min,i}$), le rapport du point de travail en fonction de la température d'entrée de l'air ($T_{L,e}$) et de la température d'entrée du fluide frigorigène ($T_V$) s'effectuant de manière couplée à la grandeur de réglage au niveau de la soupape de détente ($U_V$ ; $y_{EXV}$).

3. Procédé selon la revendication 2, dans lequel, en fonction du point de travail, la valeur de la valeur spécifique au point de travail ($DT_{1,Soll,min,i}$) est vérifiée par comparaison avec une valeur consignée préalablement pour ce point de travail (i) en termes de son minimum, et est remplacée en cas de détection d'une nouvelle valeur plus faible en tant que minimum.

4. Procédé selon l'une quelconque des revendications 1 à 3, dans lequel des grandeurs de signal sont mémorisées, lesquelles indiquent un givrage et par la mémorisation des grandeurs de signal indiquant le givrage, et en fonction du temps et de la température d'entrée de l'air ($T_{L,e}$) ainsi que des grandeurs significatives pour la charge ($T_{W,e}$ ; $T_{W,a}$) pouvant être mesurées au niveau du condensateur, un modèle d'allure du comportement du processus, valable pour les grandeurs d'influence présentes, est généré pendant une opération de givrage, lequel est pris pour base dans le cas de valeurs de nouveau identiques ou approximativement identiques des grandeurs de processus détectées pour la détermination d'une telle puissance thermique fournie au condensateur, de telle sorte qu'une durée exigée jusqu'au givrage puisse être fournie pour la pompe à chaleur ou l'installation de réfrigération.

5. Procédé selon la revendication 1, dans lequel la valeur de référence préajustée présente un ajustement de la sensibilité variable pour la fonction de détection de givrage.

6. Procédé selon l'une quelconque des revendications 1 à 5, dans lequel la valeur de consigne de la grandeur de réglage pour la différence de température ($DT_{1,Soll}$), à l'exception de la valeur ($DT_{1,MSS}$), dépend en outre, par la relation $DT_{1,Soll} = DT_{1,MSS} + T_{Ü,min}$, d'une valeur de la température de surchauffe ($T_{Ü},min$) spécifique à l'installation devant être établie, qui constitue une valeur minimale de la température de surchauffe ($T_{Ü}$), afin d'obtenir un état stable de la pompe à chaleur ou de l'installation de réfrigération.

7. Procédé selon la revendication 6, dans lequel un contrôle de la stabilité s'effectue par le fait qu'un dépassement de la courbe caractéristique virtuelle est établi à partir de la plage de travail stable en déterminant une situation de processus instable à partir du dépassement d'une pente établie en tant que valeur limite de l'allure dans le temps de la température ($T_{nV}$) du fluide frigorigène à la sortie de l'évaporateur.

8. Procédé selon la revendication 7, dans lequel, à la détection d'une situation de processus instable, une température de dépassement supplémentaire ($DT_{1,instab}$) est ajoutée à la valeur de consigne pour la différence de température ($DT_{1,Soll}$) afin d'obtenir ainsi une fermeture rapide de la soupape de détente et de transférer le processus de régulation dans la plage de travail stable.

9. Procédé selon l'une quelconque des revendications 1 à 8, **caractérisé en ce que** le mode de travail du processus et du dispositif de régulation est contrôlé automatiquement pour savoir si celui-ci se trouve dans une plage de travail stable, en établissant la stabilité ou l'instabilité au moyen de caractéristiques statiques et dynamiques supportées par des grandeurs et des paramètres mesurables, et dans chacun des états de processus enregistrés successivement avec un intervalle temporel T, une correction automatique de la caractéristique virtuelle de la valeur ($\Delta DT_{1,MSS}$) est effectuée, de sorte qu'une adaptation aux propriétés du processus existant effectivement à chaque point de travail, mais pas mesurable directement, soit réalisée et que par conséquent la caractéristique virtuelle soit proportionnelle à la caractéristique de stabilité réelle.

10. Procédé selon la revendication 9, comprenant en outre les étapes suivantes :

établissement de bandes de tolérances pour les valeurs des grandeurs mesurables et pouvant être reconstruites par calcul par le biais d'intervalles de temps pouvant être fixés ($\Delta t_{stabil}$), à l'intérieur desquels la stabilité du processus d'évaporation est garantie ; et
réalisation d'une correction de la valeur de consigne pour la différence de température ($DT_{1,Soll}$) et/ou de la caractéristique si l'on constate une sortie hors d'au moins l'une des bandes de tolérances.

11. Procédé selon la revendication 10, dans lequel la correction de la valeur de consigne ($DT_{1,Soll}$) ou de points de la caractéristique virtuelle est effectuée de telle sorte que la valeur de consigne pour la différence de température ($DT_{1,Soll}$) soit modifiée en continu de sorte qu'une valeur seuil prédéterminée d'une mesure de fluctuation des grandeurs de processus ne soit pas dépassée.

# Fig. 1

Leitgerät (Verdampfungs-Regler)

Kältemittelkreis

EP 2 667 117 B1

## Fig. 2

Fig. 3a

Fig. 3b

# Fig. 4

Erreichen und Erkennen von
MSS, Erhöhung $DT_{1,Soll}$
Exp.-Ventil Schließen

Iterative Näherung an
MSS durch Öffenen
des Exp.-ventils

Änderung von $DT_{1,Soll}$ für
den AP des Verdampfers

$\dfrac{T}{°C}$

$DT_{1,Soll}$

$DT_{1,Ist}$

MSS

$\dfrac{T_{nV}}{°C}$

$\alpha_{TnV} < \alpha_{TnV,grenz}$

$T_{nV}$

1

bleibend stabil

instabil

Stabilitätszeit (P4)

t in s

EP 2 667 117 B1

EP 2 667 117 B1

# Fig. 5a

Start

Messwerte: $T_{L,e}, T_{nV}, p_V, y_{EXV}$

Berechnung von $T_V$, $c'_p$ und h' aus dem Wert des Drucksensors unter Nutzung kältemittelspezifischer Regressionsgleichungen

$T_{\ddot{U}} = T_{nV} - T_V$

$DT_1 = T_{L,e} - T_V$

$\alpha_{TnV}$=geglätteter Anstieg von $T_{nV}$

EP 2 667 117 B1

Bestimmung der virtuellen Leistung: $\dot{Q}_{Wv}=(DT_1 \cdot c_p'' + h'') \cdot K_{EXV} \cdot y_{EXV}$

Bestimmung des aktuellen Arbeitsbereichs (AB): $i = \dfrac{\dot{Q}_{Wv}}{\dot{Q}_{EXV,max}} \cdot m$

$i \neq j$

J

N

DT$_{1,MSS}$ für aktuellen AB
der MSS-Kennlinie entnehmen

Weiches Umschalten von DT$_{1,MSS}$,
danach j=i

$DT_{1,soll} = T_{Ü,min} + DT_{1,MSS}$

1

Fig. 5b

EP 2 667 117 B1

Fig. 5b (Seite 2 von 2)

## Fig. 6

Aufnahme der
Messgrößen

Beginn von
Berechnungsschritt k

$T_{L,e,k}$ , $T_{nV,k}$ , $p_{V,k}$ , $y_{EXV,k}$

Bestimmung von
Kenngrößen und Prozessgrößen
in Schritt k

Kenngrößen und
Prozessgrößen aus Schritt k-1

$DT_{1,MSS,k-1}$, $\alpha_{TnV,k-1}$, $DT_{1,Soll,k-1}$

$K_{EXV}$, $Q_{WV,EXV,max}$

$T_{V,k}$ , $T_{Ü,k}$ , $\alpha_{TnV,k}$ $\dot{Q}_{,WV,k}$ , i    $DT_{1,k}$ $T_{L,e,k}$

Analyse von Prozesszustand
und Stabilität

Kriterien
- zulässiger Wert von $T_{Ü,k}$
- Position in MSS -Diagramm
- Gradient $\alpha_{TnV,k}$

Nachführung (Adaption) der
MSS - Kennlinie für Schritt k
( Bestimmung $DT_{1,MSS,k}$)

Nachführungsbedingungen
- stabiler Prozess
- $DT_{1,k}$ innerhalb Toleranzband
  um $DT_{1,Soll,k-1}$
- Konvergenzkriterien

Sollwertbestimmung zum
Prozesszustand in Schritt k

Sollwert-
Änderungsbedingungen
- Prozess stabil / instabil
- Umschaltzeit $t_{Umsch}$ und
- - höhe pro Änderung $\Delta T_{zykl}$

$DT_{1,Soll,k}$

$T_{Ü,min}$ , $\alpha_{TnV,k}$ , $\Delta t_{Stabil}$, z

$DT_{1,MSS,min}$ , $DT_{1,MSS,max}$ , $DT_{1,zykl}$

## Fig. 7a

**Vereisungsverlauf für A-7W45 mit EVI und max n_Lüfter**

▲ dp Luft [Pa]   ● Dt1_Soll [K]   ◆ U_EEV [V]

## Fig. 7b

**Vereisungsverlauf: A-7W45 ohne EVI und max. n_Lüfter**

▲ dp Luft [Pa]   ● Dt1_Soll [K]   ◆ U_EEV [V]

Fig. 8

# Fig. 9

Abarbeitung mit der festen Zykluszeit T

```
        ┌─────────────┐
        │    Start    │
        └──────┬──────┘
               │
        ┌──────▼──────┐
        │ while (1==1)│
        └──────┬──────┘
               │
        ┌──────▼──────┐
        │ MSS Erkennung│
        └──────┬──────┘
               │
        ┌──────▼──────┐
        │MSS Annäherung│
        └──────┬──────┘
               │
        ┌──────▼──────┐
        │ MSS Kennlinie│
        └──────┬──────┘
               │
        ┌──────▼──────┐
        │     PID     │
        └──────┬──────┘
               ▼
```

EP 2 667 117 B1

32

Fig. 9 (Seite 2 von 2)

**IN DER BESCHREIBUNG AUFGEFÜHRTE DOKUMENTE**

**In der Beschreibung aufgeführte Patentdokumente**

- US 4523435 A

- WO 2011089116 A2